# EUROPÄISCHE PATENTSCHRIFT

(11) **EP 3 630 922 B1**
(45) Veröffentlichungstag und Bekanntmachung des Hinweises auf die Patenterteilung: **16.11.2022**
(21) Anmeldenummer: 18728094.6
(22) Anmeldetag: 28.05.2018
(51) Int. Cl.: C09K 19/30, C09K 19/12, C09K 19/34, C09K 19/18, C09K 19/04

(54) **FLÜSSIGKRISTALLINES MEDIUM**
LIQUID-CRYSTAL MEDIUM
MILIEU CRISTAL LIQUIDE

(30) Priorität: 30.05.2017 DE 102017005413
(43) Veröffentlichungstag der Anmeldung: 08.04.2020
(73) Patentinhaber: Merck Patent GmbH, 64293 Darmstadt (DE)
(72) Erfinder: WITTEK, Michael, 64390 Erzhausen (DE); KLASS, Dagmar, 64291 Darmstadt (DE)
(86) Internationale Anmeldenummer: PCT/EP2018/063868
(87) Internationale Veröffentlichungsnummer: WO 2018/219841

(56) Entgegenhaltungen:
- EP-A1- 2 801 601
- EP-A1- 2 937 342
- WO-A1-2016/146245
- WO-A1-2017/013981
- DE-A1-102016 011 899
- US-A1- 2013 135 575
- US-A1- 2015 123 032

## Beschreibung

Die vorliegende Erfindung betrifft ein flüssigkristallines Medium sowie dessen Verwendung für elektrooptische Zwecke, insbesondere für Flüssigkristallichtventile für den Einsatz in Beleuchtungseinrichtungen für Fahrzeuge, dieses Medium enthaltende Flüssigkristallichtventile und auf solchen Flüssigkristallichtventilen basierende Beleuchtungseinrichtungen.

Flüssigkristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bekannt und können auf verschiedenen Effekten beruhen. Derartige Vorrichtungen sind beispielsweise TN-Zellen mit verdrillt nematischer ("twisted nematic") Struktur oder STN-Zellen ("super-twisted nematic"). Moderne TN- und STN-Displays basieren auf einer aktiven Matrix von individuell adressierbaren Flüssigkristallichtventilen (den Bildpunkten) mit integrierten roten, grünen und blauen Farbfiltern zur additiven Erzeugung der Farbbilder.

Die in Flüssigkristallanzeigen ausgenutzten elektrooptischen Effekte finden in neuerer Zeit auch für andere Anwendungen Verwendung. In der DE 19910004 A1 werden LCD-Bildschirme als Blende zur beliebigen Ausgestaltung der Helligkeitsverteilung von Beleuchtungseinrichtungen für Kraftfahrzeuge beschrieben, wodurch die Helligkeitsverteilung flexibel an die Fahrsituation angepaßt werden soll.

Solche adaptiven Beleuchtungseinrichtungen für Kraftfahrzeuge (engl.: adaptive front lighting system, AFS) erzeugen ein an die jeweilige Situation und die Umweltbedingungen angepaßtes Scheinwerferlicht und sind in der Lage beispielsweise auf die Licht- und Wetterverhältnisse, die Fahrzeugbewegung oder das Vorhandensein anderer Verkehrsteilnehmer zu reagieren, um die Umgebung konstant und optimal auszuleuchten und andere Verkehrsteilnehmer nicht zu stören. In der US 4,985,816 sind beispielsweise Bauteile offengelegt, in denen ein räumlicher Lichtmodulator in der Form einer Flüssigkristall-(LCD)anzeigeplatte bestehend aus einem Raster von lichtdurchlässigen Elementen, analog den Bildpunkten einer Flüssigkristallanzeige, eine elektrisch schaltbare, vollständige oder partielle Abschattung des Lichtkegels erzeugt mit dem Ziel, die Fahrer entgegenkommender Fahrzeuge nicht oder weniger zu blenden. Solche räumlichen Lichtmodulatoren werden wie bereits erwähnt auch als Flüssigkristallichtventile bezeichnet. Aufgrund der ähnlichen Funktionsweise wie bei Projektoren spricht man auch von Fahrzeugbeleuchtungen vom Projektor-Typ. Die Bildinformation zur kontrollierten Abschattung des Lichtkegels liefert dabei bevorzugt eine Digitalkamera.

Ein Flüssigkristallichtventil im Sinne der vorliegenden Erfindung kann eine einzige Fläche zur Modulierung des Lichts umfassen oder ein Raster (Matrix) einer Vielzahl gleicher oder verschiedener Teilflächen entsprechend den Bildpunkten (engl. "Pixel") einer Flüssigkristallanzeige. Die Fläche oder Teilfläche kann transmissiv oder reflektiv ausgebildet sein. Ein Raster von Flüssigkristallichtventilen stellt somit einen Spezialfall einer einfarbigen Matrix-Flüssigkristallanzeige dar oder kann als Teil einer solchen betrachtet werden.

In einer transmissiv ausgebildeten Ausführungsform umfaßt die erfindungsgemäße Beleuchtungseinrichtung ein oder mehrere Flüssigkristallichtventile vom Typ einer Flüssigkristallanzeige.

In einer reflektiv ausgebildeten Ausführungsform umfaßt die erfindungsgemäße Beleuchtungseinrichtung ein oder mehrere Flüssigkristallichtventile vom LCoS- (Liquid-Crystal-on-Silicon-, Flüssigkristall-auf-Silizium-) Typ.

Eine Beleuchtungseinrichtung im Sinne der Erfindung ist insbesondere ein AFS bzw. Teil eines AFS. Eine Beleuchtungseinrichtung im Sinne der Erfindung dient insbesondere der Ausleuchtung eines Bereichs vor einem Fahrzeug bzw. Kraftfahrzeug.

Fahrzeuge im Sinne der Erfindung sind ganz allgemein Fortbewegungsmittel wie beispielsweise, aber nicht beschränkt auf, Flugzeuge, Schiffe, und Landfahrzeuge wie Automobile, Motorräder und Fahrräder, sowie schienengebundene Landfahrzeuge wie z.B. Lokomotiven.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

In dem in der oben erwähnten US 4,985,816 offenbarten Flüssigkristallichtventil wird eine TN-Zelle als optisches Modulationselement verwendet, welches Bildelemente entsprechend dem gewünschten Helligkeitsprofil der Fahrzeugbeleuchtung darstellt, wobei beispielsweise eine Ansteuerspannung an den TN-Flüssigkristall zur Modulierung (Steuerung) des Transmissionsgrades eines Bildelementes angelegt wird. Wegen der dort erforderlichen Polarisatoren ist nur etwa die Hälfte des Lichtes der Lichtquelle nutzbar. Eine ebenfalls auf einer TN-Zelle basierende Alternative, die es ermöglicht, mehr als nur die Hälfte des Lichtes der Lichtquelle der Beleuchtungseinrichtung nutzbar zu machen ist in DE 10 2013 113 807 A1 offengelegt. Darin wird das Licht mittels eines polarisierenden Strahlteilers in zwei Teilstrahlen mit zueinander senkrechter Polarisationsebene geteilt und durch zwei separate, getrennt voneinander schaltbare Flüssigkristallelemente gelenkt.

Solche Beleuchtungseinrichtungen zeichnen sich durch vergleichsweise hohe Betriebstemperaturen von typischerweise 60-80°C aus, was besondere Anforderungen an die verwendeten Flüssigkristallmedien stellt: die Klärpunkte müssen höher als 120°C, bevorzugt höher als 140°C sein und wegen der starken Lichtbelastung müssen diese Medien eine besonders hohe Lichtstabilität aufweisen. Dies kann u.U. beispielsweise durch Verwendung von Materialien mit möglichst geringer Doppelbrechung begünstigt werden. Die Flüssigkristallmaterialien müssen außerdem eine gute chemische und thermische Stabilität und eine gute Stabilität gegenüber elektrischen Feldern besitzen. Ferner sollten die Flüssigkristallmaterialien niedrige Viskosität aufweisen und in den Zellen relativ kurze Ansprechzeiten, möglichst tiefe Betriebsspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase, vorzugsweise von -40°C bis 150°C. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen
genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Lichtventile in Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter Licht- und Temperaturstabilität und geringerem Dampfdruck erwünscht. Derartige Matrix-Flüssigkristallanzeigen sind bekannt und das bauartliche Prinzip kann auch für die erfindungsgemäße Beleuchtungseinrichtung verwendet werden.

Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Die TFT-Anzeigen und entsprechende Lichtventile für Beleuchtungseinrichtungen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder Licht-Belastung zeigt. Dies ist auch beim Einsatz von Lichtventilen in Beleuchtungseinrichtungen für Fahrzeuge relevant, da der Flüssigkristall darin extremen Temperatur- und Lichtbelastungen ausgesetzt ist und ein geringer spezifischer Anfangswiderstand und eine schnelle Zunahme des spezifischen Widerstands bei Belastung in der Regel mit einer geringen Langzeitstabilität korreliert.

Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den Anforderungen für die Anwendung in Beleuchtungseinrichtungen.

Es besteht somit immer noch ein großer Bedarf nach Flüssigkristallmischungen mit sehr hohem spezifischen Widerstand bei gleichzeitig großem Arbeitstemperaturbereich und hoher Lichtstabilität.

Bei Flüssigkristallichtventilen für Beleuchtungseinrichtungen für Fahrzeuge sind Medien erwünscht, die folgende Vorteile in den Zellen ermöglichen:
- erweiterter nematischer Phasenbereich (insbesondere zu hohen Temperaturen)
- lagerstabil, auch bei tiefen Temperaturen
- Schaltbarkeit bei tiefen Temperaturen
- erhöhte Beständigkeit gegenüber Licht.

Für die Orientierung der oben erwähnten flüssigkristallinen Medien sind gewöhnlich Orientierungsschichten aus Polyimid vorgesehen. Diese können eine Quelle von Verunreinigungen darstellen, was sich insbesondere bei den relativ hohen Temperaturen bemerkbar macht, die beim Betrieb von Beleuchtungseinrichtungen für Fahrzeuge auftreten und u.a. zu schlechtem spezifischem Widerstand des flüssigkristallinen Mediums führen kann.

Es gibt bereits mehrere Ansätze, Flüssigkristallanzeigen herzustellen, die ohne eine Polyimid-Orientierungsschicht auskommen, darunter anorganische Orientierungsschichten (s. z.B. H.K. Baik et al., Langmuir 2005, 21, 11079-11084; J.B.Kim et al., Adv. Mater. 2008, 20, 3073-3078). Anzeigen mit solchen Orientierungsschichten weisen eine homöotrope Orientierung der Flüssigkristallmoleküle auf und basieren daher auf flüssigkristallinen Medien mit negativer dielektrischer Anisotropie.

Flüssigkristalline Medien mit negativer dielektrischer Anisotropie sind insbesondere aus der Verwendung in elektrooptischen Anzeigen mit einer Aktivmatrix-Adressierung basierend auf dem ECB-Effekt bekannt.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned) und haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen.

Flüssigkristalline Medien, die besonders für Beleuchtungseinrichtungen für Fahrzeuge geeignet sind, sind beispielsweise in DE 102016011899 A1 offengelegt. Diese weisen eine positive dielektrische Anisotropie auf und sind daher für anorganische Orientierungsschichten, die eine homöotrope Orientierung induzieren nicht geeignet.

Der Erfindung liegt die Aufgabe zugrunde, Medien mit negativer dielektrischer Anisotropie, insbesondere für die oben erwähnten Flüssigkristallichtventile für Beleuchtungseinrichtungen für Fahrzeuge bereitzustellen, die die oben angegebenen Nachteile nicht oder nur in geringerem Maße aufweisen, und vorzugsweise gleichzeitig sehr hohe Klärpunkte und niedrige Doppelbrechung besitzen.

Es wurde nun gefunden, daß diese Aufgabe gelöst werden kann, wenn man in Flüssigkristallbauteilen erfindungsgemäße Medien verwendet.

Gegenstand der Erfindung ist ein flüssigkristallines Medium enthaltend, in einer Gesamtkonzentration von 65% mehr, eine oder mehrere Verbindungen aus der Gruppe der Verbindungen der Formeln IA, IB, IC, ID und II 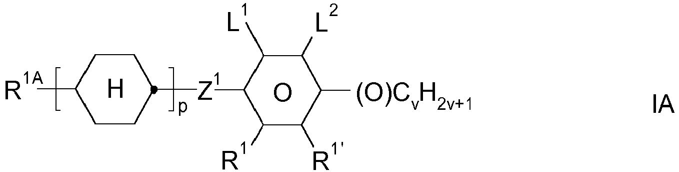 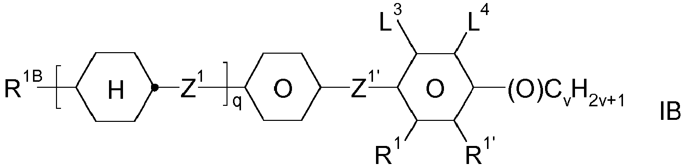 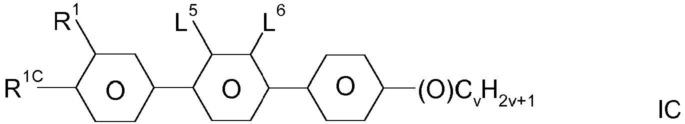 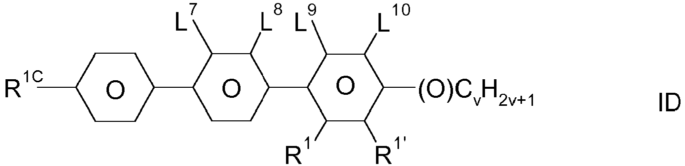 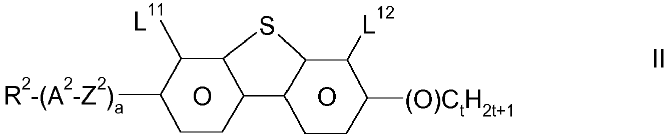 worin
- R^{1A}, R^{1B} , R^{1C} und R²: jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch 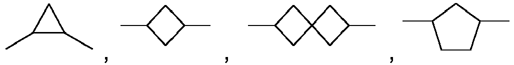 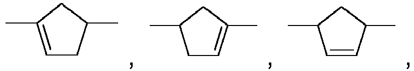 -C≡C-, -O-, -S-, -CF₂O-, -OCF₂-, -OC-O- oder -O-CO- so ersetzt sein können, daß O-Atome nicht direkt miteinander verknüpft sind,
- R¹ und R^{1'}: jeweils unabhängig voneinander H oder Alkyl mit 1 bis 4 C-Atomen, bevorzugt H oder Methyl, besonders bevorzugt H,
- A²: a) 1,4-Cyclohexylen oder 1,4-Cyclohexenylen, worin eine oder zwei nicht benachbarte CH₂ -Gruppen durch -O- oder -S- ersetzt sein können,

- L¹ bis L¹²: b) 1,4-Phenylen, worin eine oder zwei CH-Gruppen durch N ersetzt sein können und worin eine oder mehrere H-Atome durch F oder Cl ersetzt sein können, jeweils unabhängig voneinander F, CF₃, CHF₂ oder Cl,
- Z¹, Z^{1'} und Z²: jeweils unabhängig voneinander eine Einfachbindung, -CH₂CH₂-, -CH=CH-, -CF₂O-, -OCF₂-, -CH₂O-, -OCH₂-, -COO-, -OCO-, -C₂F₄-, -CF=CF-, -C≡C-, -CH=CHCH₂O-,
- a: 0 oder 1,
- p: 0, 1 oder 2,
- q: 0 oder 1,
- v: eine ganze Zahl von 1 bis 7,
- t: eine ganze Zahl von 1 bis 7, und
- (O): eine Einfachbindung oder -O-
bedeuten,
enthält,
wobei das Medium zusätzlich eine oder mehrere Verbindungen der Formel IV-1 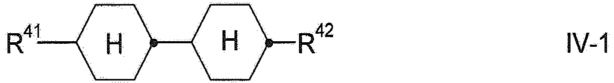 worin
   - R⁴¹ und R⁴²: jeweils unabhängig voneinander geradkettiges Alkyl oder Alkenyl mit 1 bis 7 C-Atomen, alternativ R⁴² auch Alkoxy mit 1 bis 7 C-Atomen
bedeuten,
in einer Gesamtkonzentration von 5 % oder weniger
und
eine oder mehrere Verbindungen der Formeln 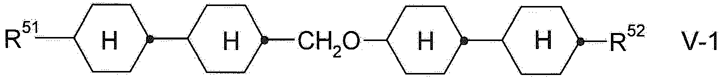 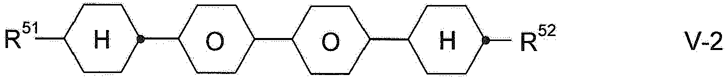 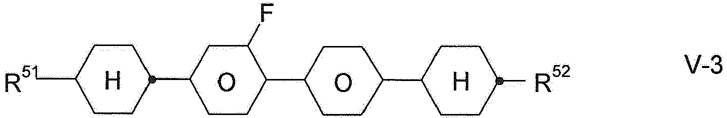 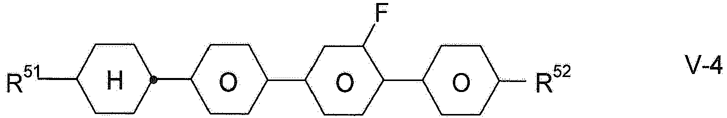 worin
   - R⁵¹ und R⁵²: jeweils unabhängig voneinander geradkettiges Alkyl oder Alkenyl mit bis zu 7 C-Atomen, R⁵² alternativ Alkoxy mit 1 bis 7 C-Atomen,
   bedeuten,
in einer Gesamtkonzentration im Bereich von 8 % bis 25 % enthält, wobei der Klärpunkt des Mediums 120°C oder mehr beträgt.

Medien enthaltend Verbindungen ausgewählt aus polaren Verbindungen der Formeln IA, IB, IC, ID und II haben in der Regel eine negative dielektrische Anisotropie und sind zur Verwendung in Displays in US 2015/123032 A1, EP 2 801 601 A1, EP 2 937 342 A1, WO 2016/146245 A1 und DE 10 2016 011899 A1 beschrieben.

In der vorliegenden Anmeldung umfassen sämtliche Atome auch ihre Isotope. Insbesondere können ein oder mehrere Wasserstoffatome (H) durch Deuterium (D) ersetzt sein, was in einigen Ausführungsformen besonders bevorzugt ist; ein hoher Deuterierungsgrad ermöglicht oder erleichtert den analytischen Nachweis von Verbindungen, insbesondere im Falle geringer Konzentrationen.

Falls ein Rest einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2-Oxabutyl (= Ethoxymethyl) oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls ein Rest einen Alkylrest bedeutet, in dem eine CH₂-Gruppe durch - CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls ein Rest einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 7 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy-carbonyl)-propyl oder 4-(Methoxycarbonyl)-butyl.

Falls ein Rest einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls ein Rest einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position.

Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position. Verbindungen mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls ein Rest einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy--carbonyl)-pentyl, 6,6-Bis-(methocycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formel IA, IB, IC und ID sind bevorzugt ausgewählt aus den folgenden Unterformeln: 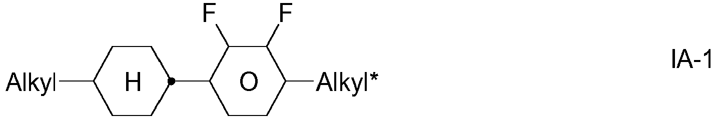 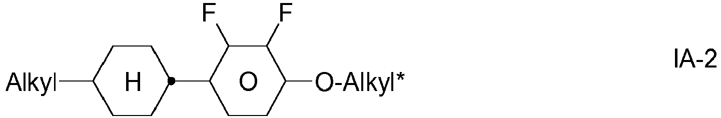 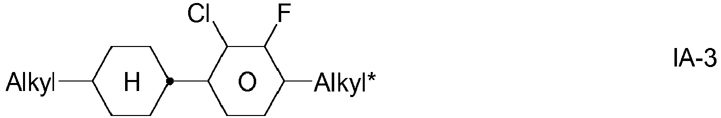 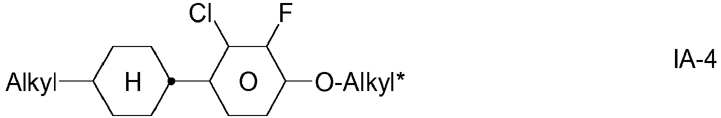 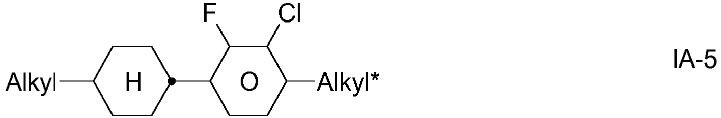 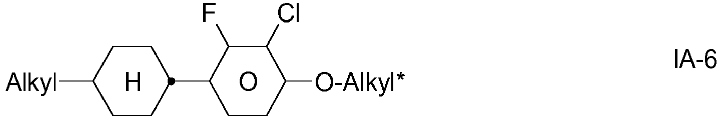 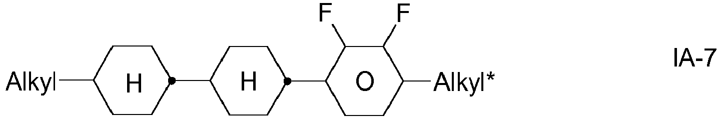 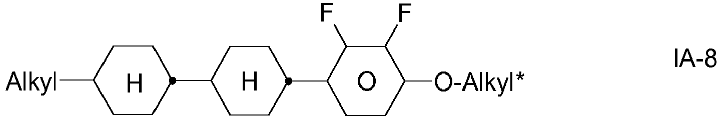 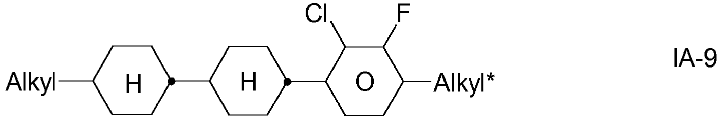 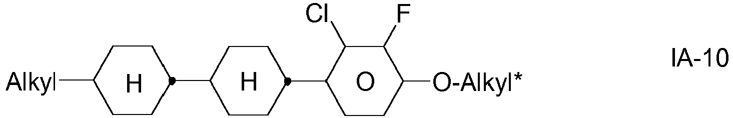 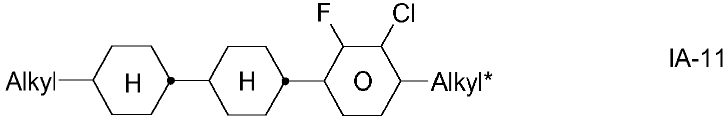 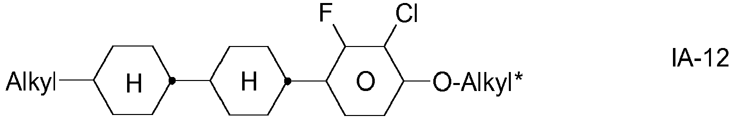 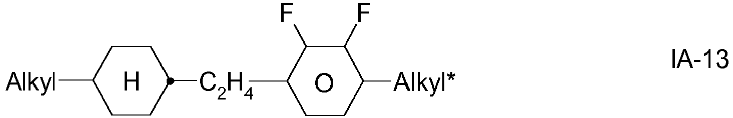 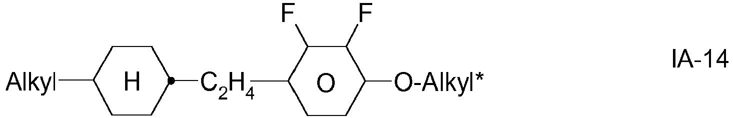 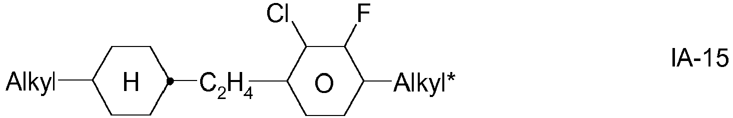 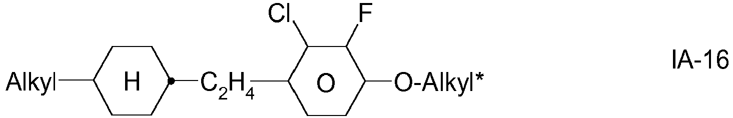 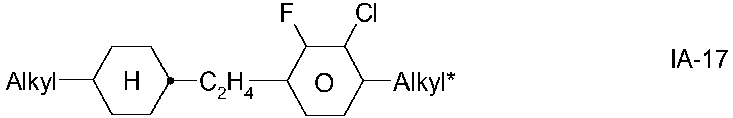 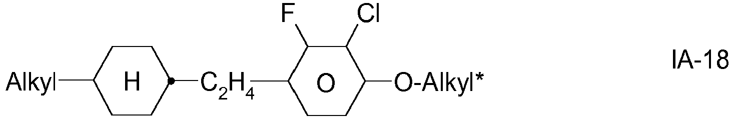 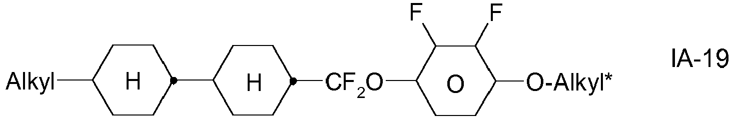 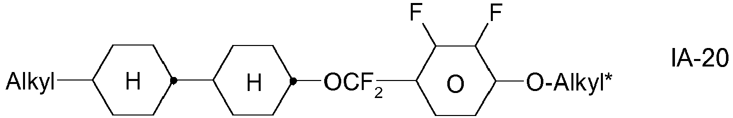 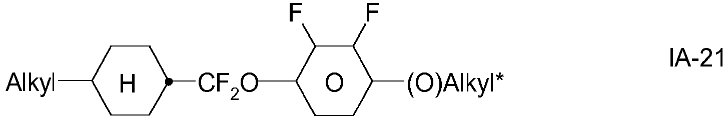 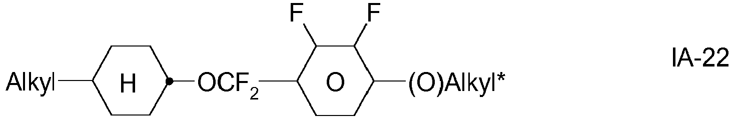 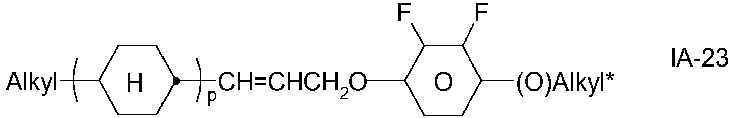 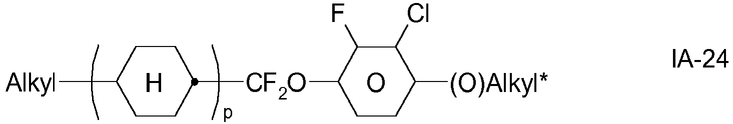 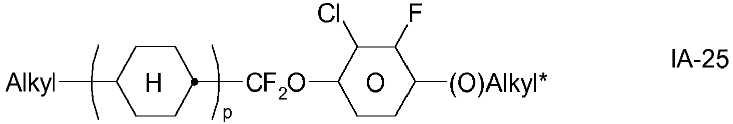 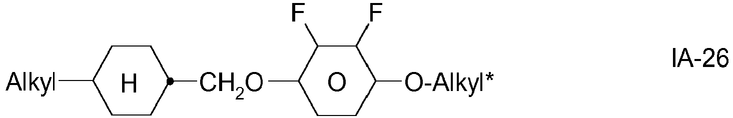 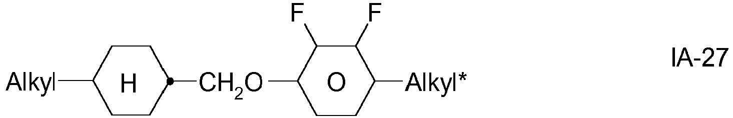 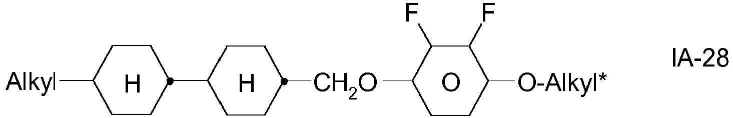 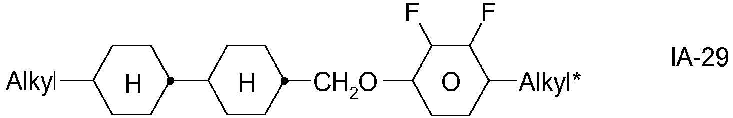 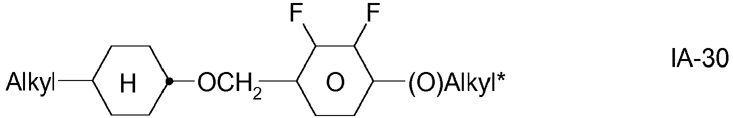 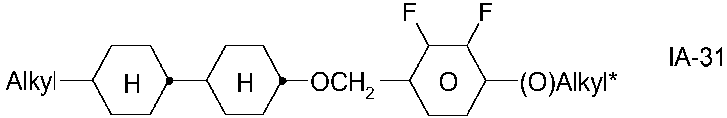 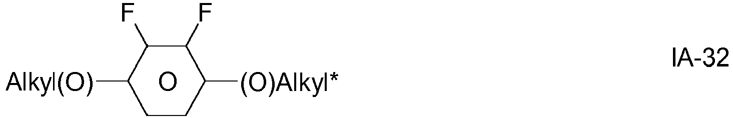 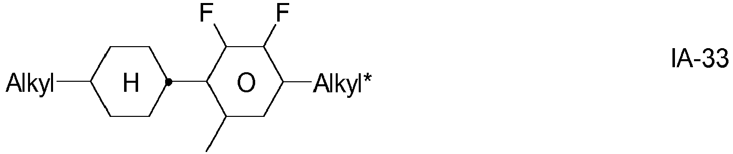 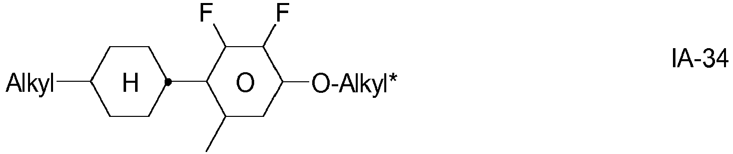 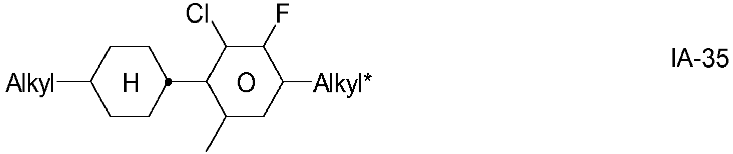 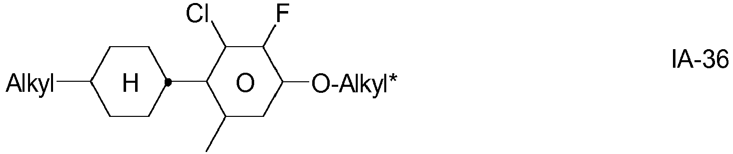 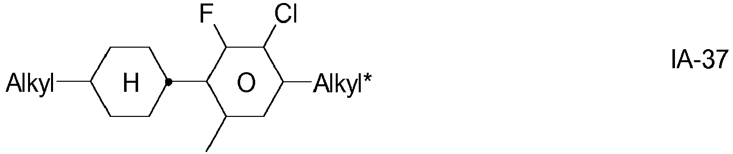 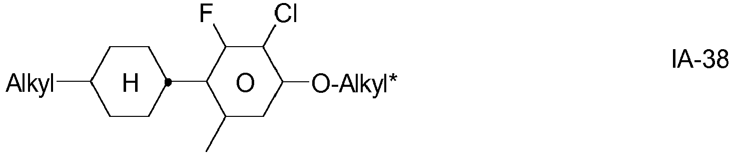 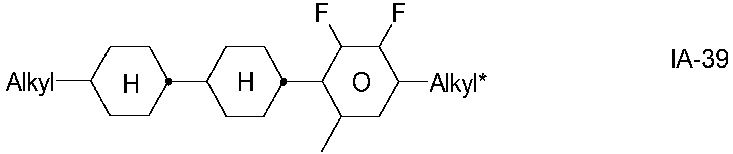 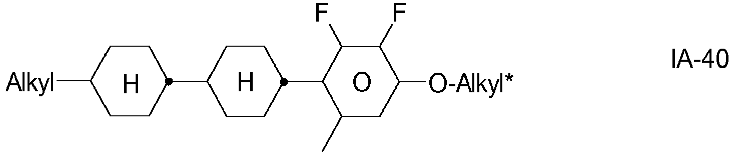 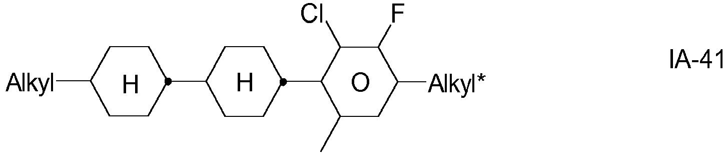 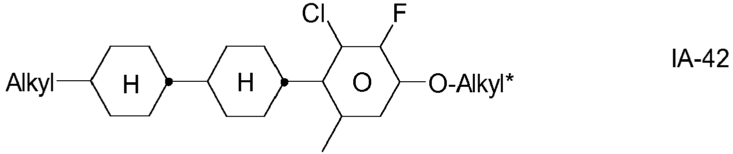 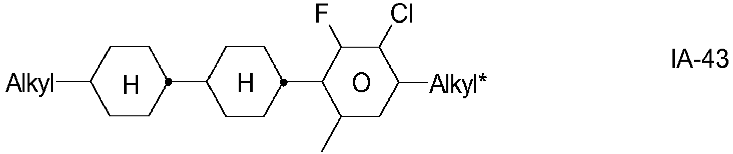 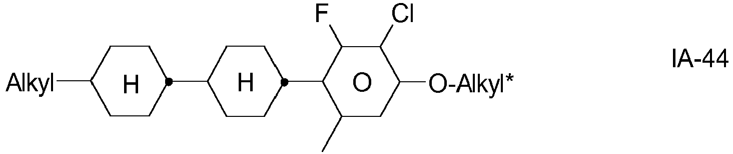 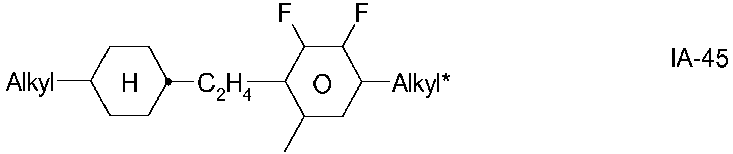 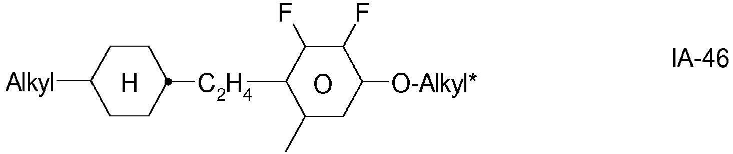 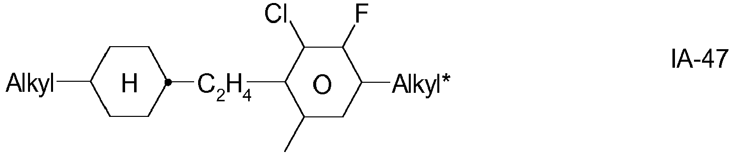 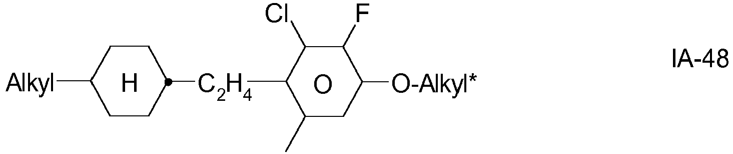 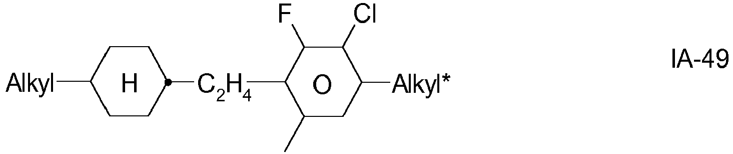 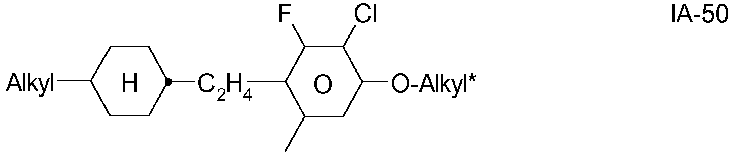 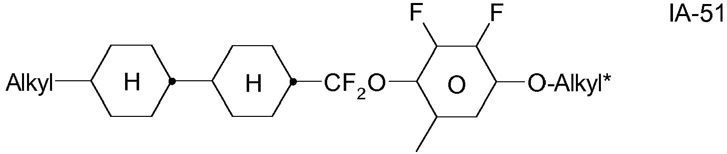 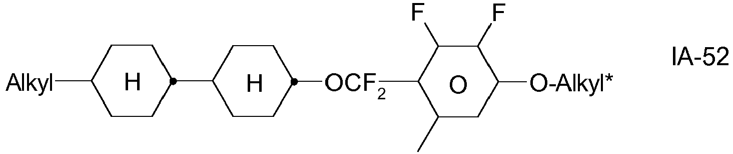 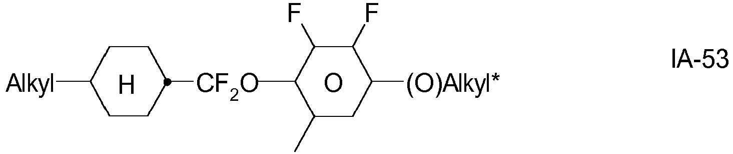 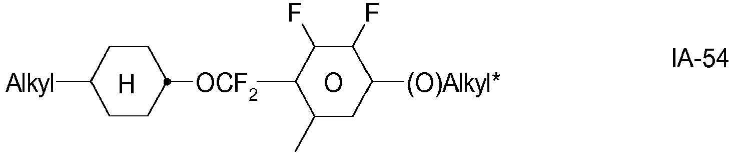 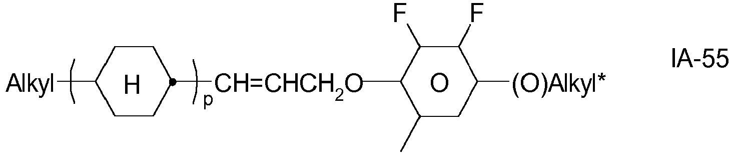 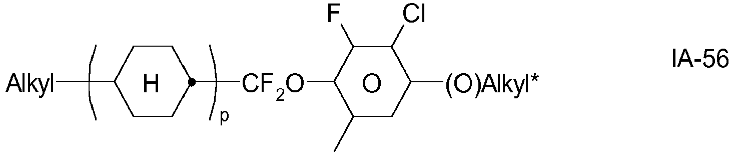 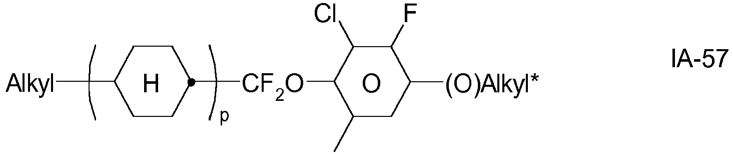 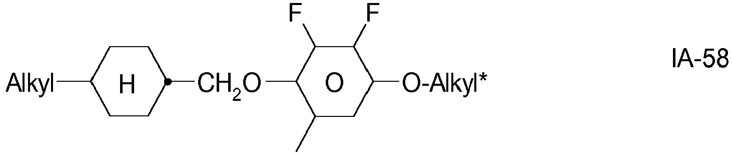 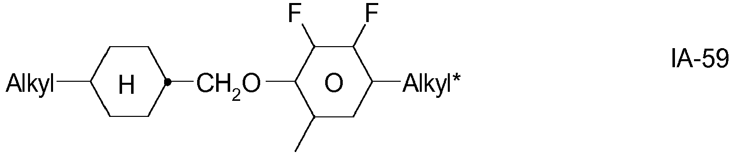 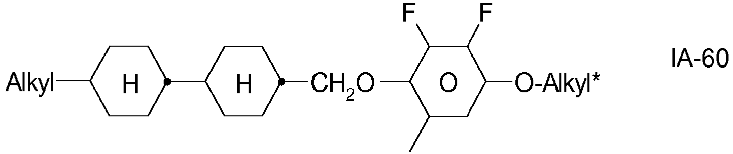 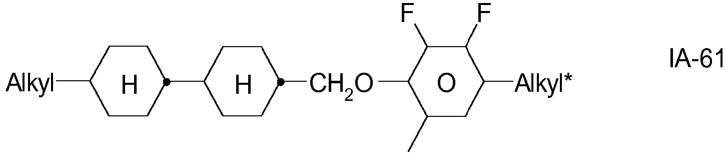 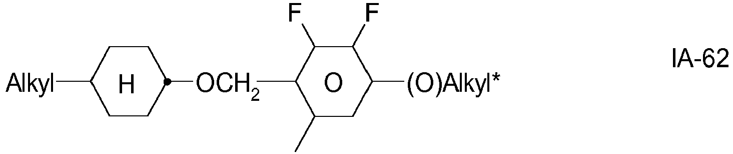 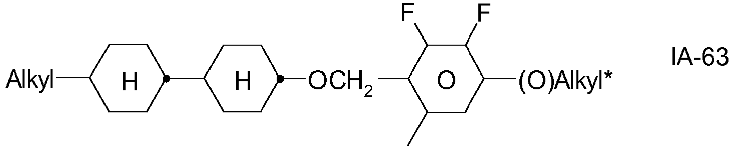 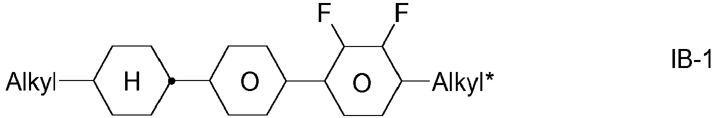 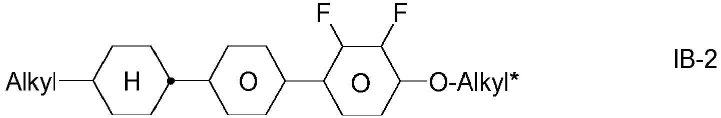 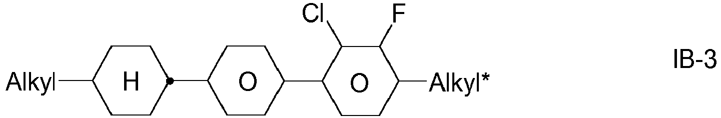 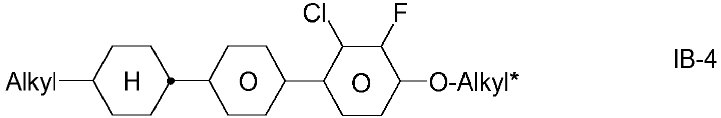 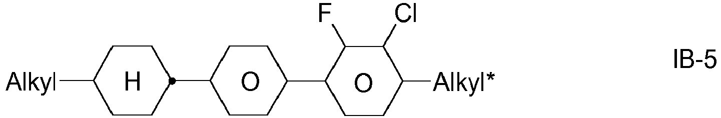 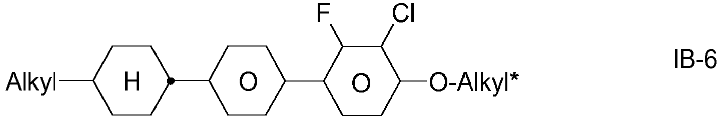 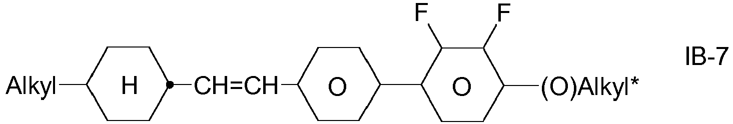 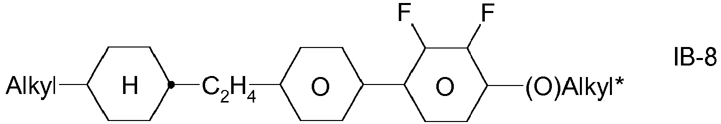 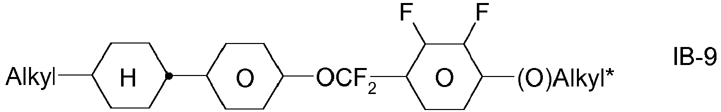 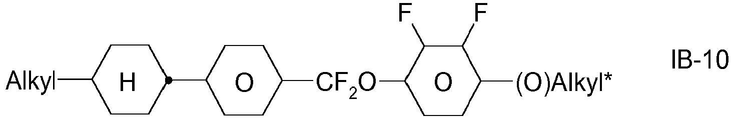 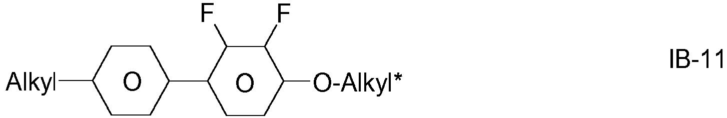 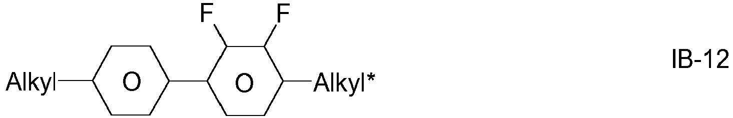 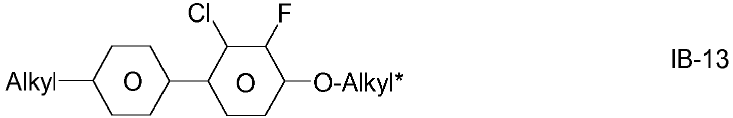 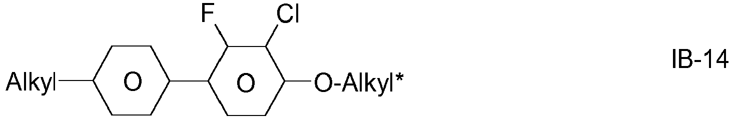 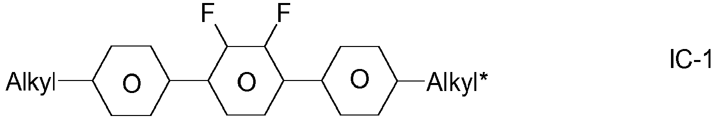 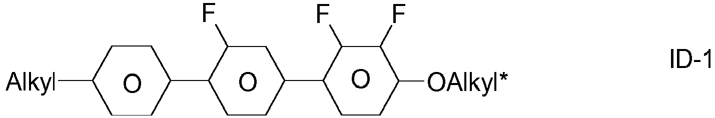
- worin Alkyl und Alkyl*: jeweils unabhängig voneinander einen geradkettigen Alkylrest mit 1-7 C-Atomen bedeuten, in dem eine CH₂-Gruppe durch 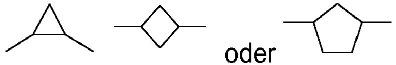 ersetzt sein kann, und
- (O): für -O- oder eine Einfachbindung steht.

Besonders bevorzugte erfindungsgemäße Medien enthalten eine oder mehrere Verbindungen der Formeln IA-2, IA-8, IA-14, IA-26, IA-28, IA-34, IA-40, IB-2, IB-11, IC-1 und ID-1, ganz besonders bevorzugt IA-2, IA-8, IB-2, IB-11, IC-1 und ID-1.

In einer ganz besonders bevorzugten Ausführungsform enthält das erfindungsgemäße Medium eine oder mehrere Verbindungen ausgewählt aus der Gruppe der Verbindungen IA-8-1 bis IA-8-10

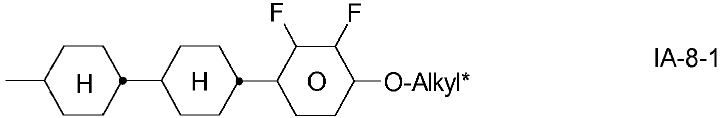

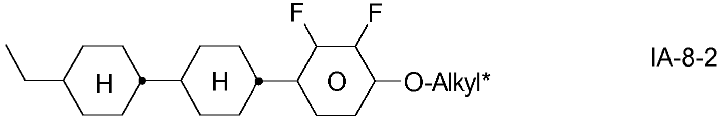

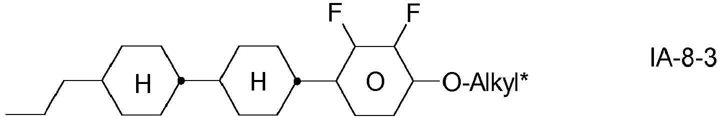

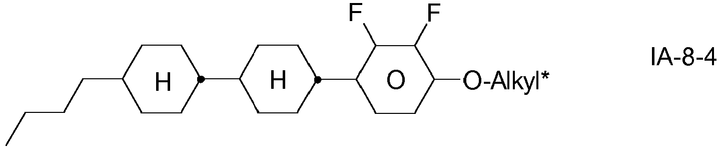

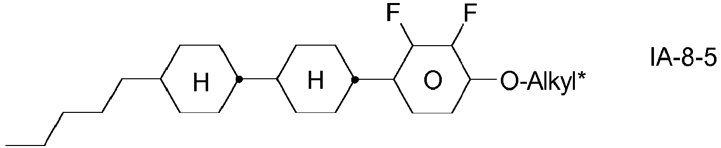

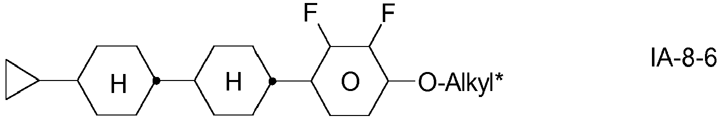

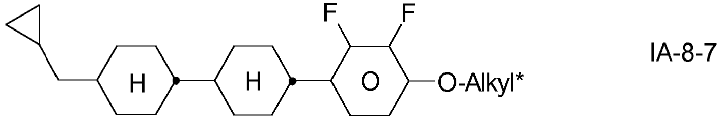

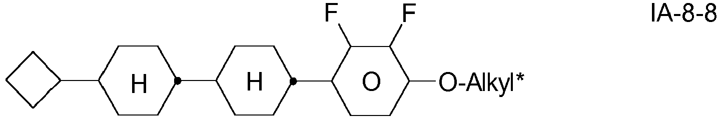

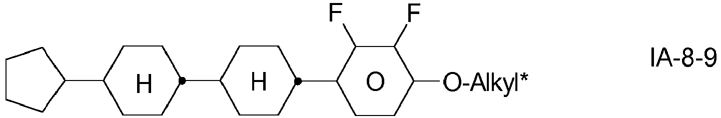

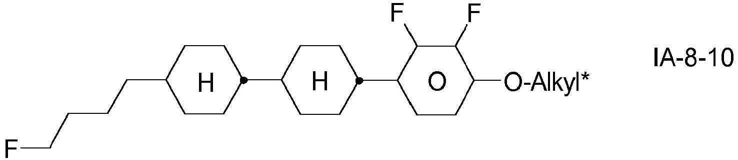

Die Verbindungen der Formel II sind bevorzugt ausgewählt aus der Gruppe der Verbindungen der Formeln 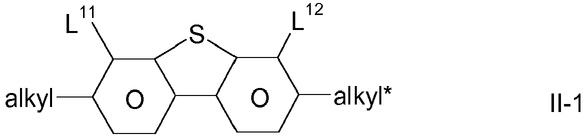 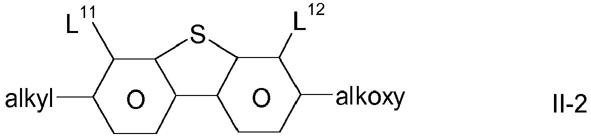 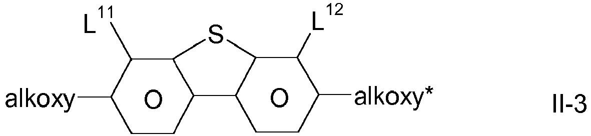 worin
- alkyl und alkyl*: jeweils unabhängig voneinander einen geradkettigen Alkylrest mit 1-7 C-Atomen bedeuten, in dem eine CH₂-Gruppe durch 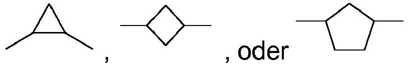 ersetzt sein kann,
- alkoxy und alkoxy*: jeweils unabhängig voneinander einen geradkettigen Alkoxyrest mit 1-7 C-Atomen bedeuten, in dem eine CH₂-Gruppe durch 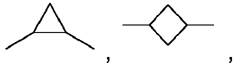 oder 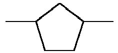 ersetzt sein kann,
und L¹¹ und L¹² die oben angegebenen Bedeutung haben.

Bevorzugt bedeuten L¹¹ und L¹² beide F.

Besonders bevorzugte Verbindungen der Formel II sind ausgewählt aus der Gruppe der Verbindungen der Formel II-3a 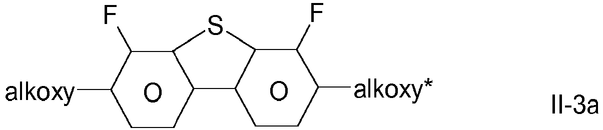 worin alkoxy und alkoxy* unverzweigtes Alkoxy mit 1 bis 7 C-Atomen bedeutet.

In einer bevorzugten Ausführungsform enthält das erfindungsgemäße Medium zusätzlich eine oder mehrere Verbindungen der Formeln III-1 bis III-9, 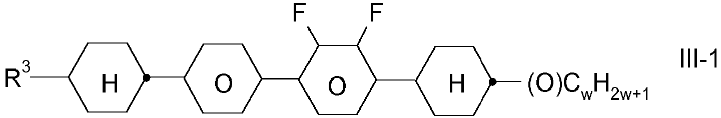 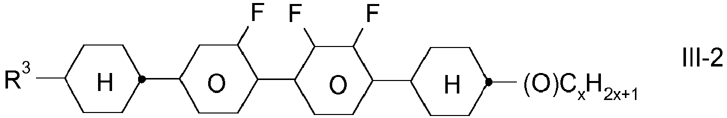 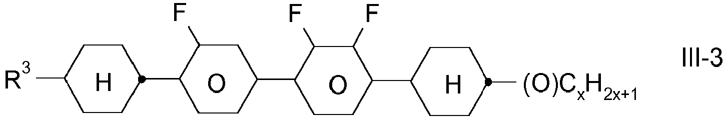 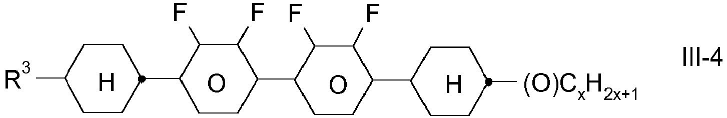 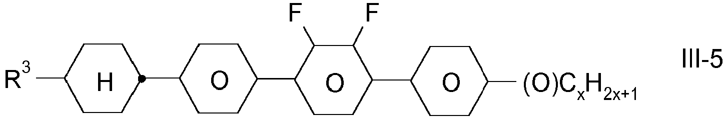 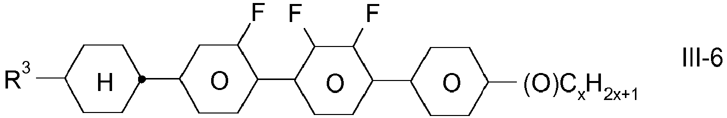 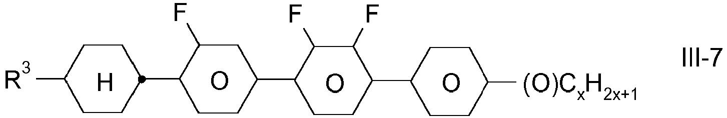 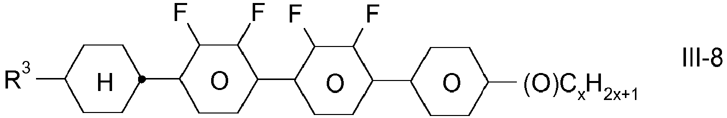 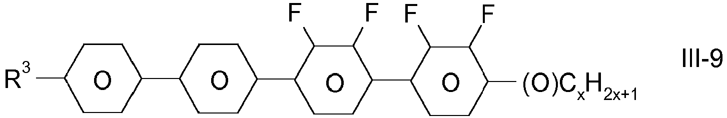 worin
- R³: jeweils unabhängig voneinander eine der unter Formel IA für R^{1A} angegebenen Bedeutungen hat, und
- w und x: jeweils unabhängig voneinander 1 bis 7,
- (O): eine Einfachbindung oder -O-
bedeuten.

Bevorzugt bedeutet R³ unverzweigtes Alkyl mit 1 bis 7 C-Atomen.

Bevorzugt enthält das erfindungsgemäße Medium eine oder mehrere Verbindungen ausgewählt aus der Gruppe der Verbindungen der Formeln IV-2 bis IV-15 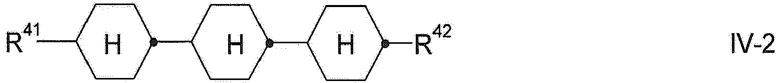 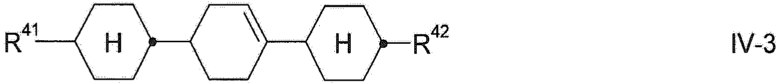 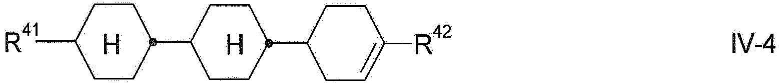 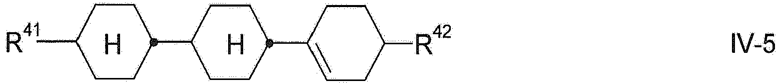 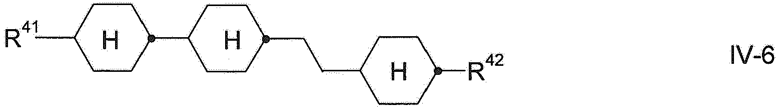 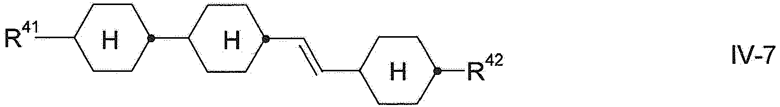 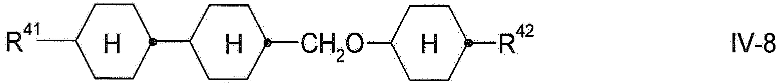 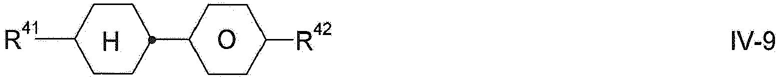 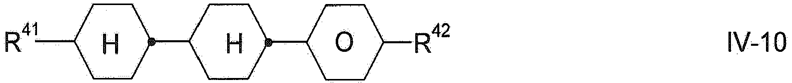 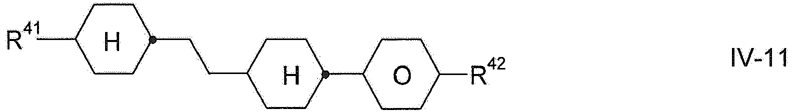 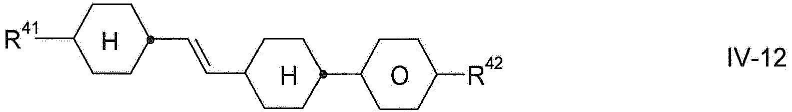 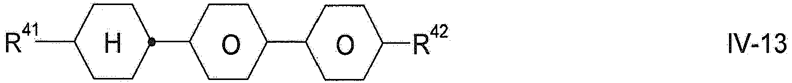 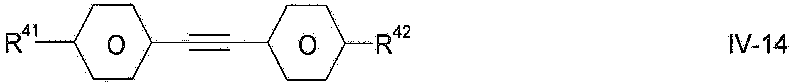 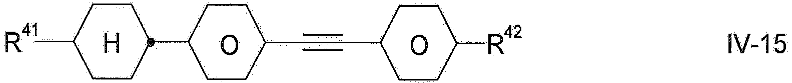 worin R⁴¹ und R⁴² die für R^{1A} angegebenen Bedeutungen haben. Vorzugsweise bedeuten R⁴¹ und R⁴² jeweils unabhängig voneinander geradkettiges Alkyl oder Alkenyl mit 1 bis 7 C-Atomen, alternativ R⁴² auch Alkoxy mit 1 bis 7 C-Atomen.

Bevorzugt enthält das Medium eine oder mehrere Verbindungen der Formel IV-10.

Weiterer Gegenstand der Erfindung sind auch elektrooptische Bauteile, insbesondere Lichtventile, basierend auf dem ECB-Effekt, mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit negativer dielektrischer Anisotropie und hohem spezifischem Widerstand, die die erfindungsgemäßen Medien enthalten sowie die Verwendung dieser Medien für elektrooptische Zwecke.

Weiterer Gegenstand der Erfindung ist die Verwendung der erfindungsgemäßen elektrooptischen Bauteile in Beleuchtungseinrichtungen für Fahrzeuge und in Flüssigkristallanzeigen, insbesondere VA, IPS- und FFS-Anzeigen.

Weiterer Gegenstand der Erfindung sind Beleuchtungseinrichtungen für Fahrzeuge sowie elektrooptische Anzeigen, die diese Bauteile enthalten.

Der Aufbau der erfindungsgemäßen Lichtventile aus Polarisatoren, Elektrodengrundplatten und Elektroden mit Oberflächenbehandlung entspricht der für derartige Bauteile üblichen Bauweise. Dabei ist der Begriff der üblichen Bauweise hier weit gefaßt und umfaßt auch alle Abwandlungen und Modifikationen der Bauteile, insbesondere auch Matrix-Anzeigeelemente auf Basis von poly-Si TFT oder MIM.

Eine erfindungsgemäße Beleuchtungseinrichtung für Fahrzeuge weist zumindest eine Lichtquelle auf. Von dieser Lichtquelle wird Licht emittiert, so daß weiter wenigstens eine Blendenvorrichtung für die Beeinflussung des von der Lichtquelle emittierten Lichts vorgesehen ist. Die Blendenvorrichtung ist als LCD-Blende ausgebildet und weist dementsprechend mindestens ein Flüssigkristallichtventil auf, welches von hinten durchleuchtbar ist.

Bei einer erfindungsgemäßen Beleuchtungseinrichtung kann die Lichtquelle in unterschiedlichster Weise ausgestaltet sein. Sie kann ein oder mehrere Leuchtmittel aufweisen. Als Leuchtmittel kommen z. B. konventionelle Leuchtmittel in Form von Glühlampen oder Gasentladungslampen in Frage. Auch moderne Leuchtmittel, z. B. LEDs, sind im Rahmen der vorliegenden Erfindung als Leuchtmittel für die Lichtquelle denkbar, sowie insbesondere auch die für Flüssigkristallanzeigen verwendeten Kaltkathodenlampen (CCFL). Die einzelnen Leuchtmittel können unterschiedlich, z. B. in matrixartiger Weise, angeordnet sein. Selbstverständlich können in der Lichtquelle bzw. in der Beleuchtungseinrichtung ein oder mehrere Anordnungen von weiteren optischen Bauteilen Vorteile mit sich bringen. Dabei kann es sich z. B. um ein oder mehrerer Reflektoren oder ein oder mehrere Linsen handeln. Vorteilhaft ist es ebenfalls, wenn bei einer erfindungsgemäßen Beleuchtungseinrichtung das Flüssigkristallichtventil einen ersten Polarisator, durch welchen das von der Lichtquelle zur Verfügung gestellte Licht eindringt, aufweist. Weiter ist ein zweiter Polarisator vorgesehen, durch welchen das Licht das Flüssigkristallichtventil verläßt. Zwischen dem ersten Polarisator und dem zweiten Polarisator ist eine Schicht enthaltend das erfindungsgemäße Flüssigkristallmedium angeordnet. Diese Flüssigkristallschicht dient dazu, die Polarisationsebene des durch diese Flüssigkristallschicht hindurchdringenden Lichts in Abhängigkeit einer anliegenden Spannung zu drehen. Je nach Art und Weise der Ausbildung der Flüssigkristallschicht kann diese Flüssigkristallschicht im elektrischen

Feld ein Drehen der Polarisation des Lichts oder ein Unterlassen dieser Drehfunktion des durchtretenden Lichts bewirken. Bei einer solchen Ausführungsform ist das Flüssigkristallichtventil und insbesondere der erste Polarisator temperaturbeständig bis ca. 200 °C ausgebildet. Dies ist insbesondere beim ersten Polarisator wichtig, da dieser bis zu ca. 50% des von der Lichtquelle emittierten Lichts und der zugehörigen Energie aufnimmt. Die verschiedenen Ausgestaltungen der Polarisatoren im Zusammenhang mit der Orientierung der Flüssigkristallmoleküle in der Flüssigkristallschicht entsprechen im wesentlichen den in Flüssigkristallanzeigen verwendeten und sind dem Fachmann bekannt. Grundsätzlich sind alle bekannten Konfigurationen geeignet und bevorzugt sind Flüssigkristallichtventile vom VA-, IPS- oder FFS-Typ, besonders bevorzugt vom VA-Typ.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Phasenbreite, Viskosität bei tiefer Temperatur, thermischer und UV-Stabilität und dielektrischer Anisotropie übertreffen bei weitem bisherige Materialien aus dem Stand der Technik.

Es versteht sich, daß durch geeignete Wahl der Komponenten der erfindungsgemäßen Mischungen auch höhere Klärpunkte (z.B. oberhalb von 150 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden.

Die erfindungsgemäßen Flüssigkristallmischungen ermöglichen es in vorteilhafter Weise unter Beibehaltung der nematischen Phase bis -20°C und bevorzugt bis -30°C, besonders bevorzugt bis -40 °C, einen Klärpunkt von 120°C oder mehr, vorzugsweise von 130 °C oder mehr, besonders bevorzugt von 135°C oder mehr und ganz besonders bevorzugt von 140°C oder mehr zu erreichen.

Der nematische Phasenbereich ist vorzugsweise mindestens 140 K, besonders bevorzugt mindestens 160 K, insbesondere mindestens 180 K. Vorzugsweise erstreckt sich dieser Bereich mindestens von -40° bis +140°.

Die untere Grenze des nematischen Phasenbereichs ist die Temperatur, bei der beim Abkühlen von der nematischen Phase ein Übergang von der nematischen Phase zu einer anderen flüssigkristallinen Phase, beispielsweise einer smektische Phase, oder Kristallisation eintritt. Diese liegt bei den erfindungsgemäßen Mischungen bei ≤ -20°C, bevorzugt bei ≤ -30 °C, besonders bevorzugt bei ≤ -40°C.

Die obere Grenze des nematischen Phasenbereichs ist die Temperatur, bei der beim Erwärmen von der nematischen Phase ein Übergang von der nematischen Phase zur isotropen flüssigen Phase beobachtet wird (Klärpunkt). Diese liegt bei den erfindungsgemäßen Mischungen bei ≥ 120°C, bevorzugt bei ≥ 130 °C, besonders bevorzugt bei ≥ 140°C und ganz besonders bevorzugt bei ≥ 145°C.

Die erfindungsgemäßen Flüssigkristallmischungen weisen eine dielektrische Anisotropie Δε von -2,0 oder weniger, vorzugsweise -3,0 oder weniger und besonders bevorzugt von -4,0 oder weniger auf.

Die erfindungsgemäßen Flüssigkristallmischungen weisen eine dielektrische Anisotropie Δε im Bereich von -2,5 bis -8,0, bevorzugt von -3,5 bis -7,0, besonders bevorzugt von -4,0 bis -6,0 auf.

Die erfindungsgemäßen Flüssigkristallmischungen ermöglichen es, einen hohen Wert für den spezifischen Widerstand zu erreichen, wodurch hervorragende erfindungsgemäße Lichtventile erzielt werden können. Insbesondere sind die Mischungen durch kleine Betriebsspannungen gekennzeichnet.

Die erfindungsgemäßen Flüssigkristallmischungen weisen eine optische Anisotropie (Δn) im Bereich von 0,050 bis 0,200 auf, bevorzugt von 0,080 bis 0,190 , besonders bevorzugt von 0,100 bis 0,180.

Die Rotationsviskosität γ₁ der erfindungsgemäßen Mischungen bei 20 °C ist vorzugsweise < 350 mPa·s, besonders bevorzugt < 300 mPa·s.

Weitere bevorzugte Ausführungsformen sind im folgenden angegeben, wobei Verbindungen und Verbindungsklassen durch Akronyme angegeben werden. Die Bedeutung dieser Akronyme ist aus den unten aufgeführten Tabellen 1 bis 3 und Tabelle A ersichtlich. Die bevorzugten Ausführungsformen sind für sich allein oder in Kombination miteinander bevorzugt.
- Das Medium enthält eine oder mehrere Verbindungen ausgewählt aus der Gruppe der Verbindungen der Formeln IA, IB, IC, ID und II in einer Gesamtkonzentration im Bereich von 65 % bis 90 %, bevorzugt von 68% bis 85%, ganz besonders bevorzugt von 70 % bis 80 %.
- Das Medium enthält eine oder mehrere Verbindungen ausgewählt aus der Gruppe der Verbindungen der Formeln IA, IB, IC, ID und II und IV-2 bis IV-8 und V-1 bis V-4 in einer Gesamtkonzentration im Bereich von 80 % bis 100 %, bevorzugt von 85% bis 98%, ganz besonders bevorzugt von 90 % bis 95%.
- Das Medium enthält keine Verbindung IV-1oder IV-9.
- Das Medium enthält eine oder mehrere Verbindungen der Formel IV-1 und/oder IV-9 in einer Gesamtkonzentration von 20 % oder weniger, bevorzugt von 16 % oder weniger, besonders bevorzugt von 10 % oder weniger und ganz besonders bevorzugt von 5 % oder weniger.
- Das Medium enthält eine oder mehrere Verbindungen CC-n-V, insbesondere CC-3-V und/oder CC-4-V in einer Gesamtkonzentration von 5% oder weniger.
- Das Medium enthält eine oder mehrere Verbindungen ausgewählt aus den Verbindungen der Gruppe CCH-nm, CC-n-Vm und CC-n-mV1 in einer Gesamtkonzentration von 5% oder weniger, bevorzugt 3% oder weniger und besonders bevorzug 1% oder weniger, insbesondere im Bereich von 0,01% bis 0,5%.
- Das Medium enthält eine oder mehrere Verbindungen der Formel IA-2 in einer Gesamtkonzentration von mehr als 0 % bis 30 %, bevorzugt im Bereich von 0,5 % bis 25 %, besonders bevorzugt im Bereich von 5 % bis 20 %.
- Das Medium enthält eine oder mehrere Verbindungen ausgewählt aus der Gruppe der Verbindungen der Formeln IA-2 und IV-1 in einer Gesamtkonzentration im Bereich von 5 % bis 40 %, bevorzugt im Bereich von 7 % bis 35 %, besonders bevorzugt im Bereich von 10% bis 30 %.
- Das Medium enthält eine, zwei oder mehr Verbindungen der Formel II-3a, besonders bevorzugt die Verbindungen B(S)-2O-O4 und B(S)-2O-O5 in einer Gesamtkonzentration von 5 % bis 25%, bevorzugt von 10 % bis 20 %, besonders bevorzugt von 12 % bis 16 %.
- Das Medium enthält zwei oder mehr Verbindungen der Formel IC-1 in einer Gesamtkonzentration von 20% oder mehr.
- Das Medium enthält zwei, drei oder mehr Verbindungen der Formel V-3 in einer Gesamtkonzentration im Bereich von 5 % bis 20 %, besonders bevorzugt von 7 % bis 15 %, ganz besonders bevorzugt von 9 % bis 12 %.
- Das Medium enthält zwei, drei oder mehr Verbindungen der Formel V-4 in einer Gesamtkonzentration im Bereich von 5 % bis 20 %, besonders bevorzugt von 7 % bis 12 %, ganz besonders bevorzugt von 8 % bis 10 %.
- Das Medium enthält zwei, drei oder mehr Verbindungen ausgewählt aus der Gruppe der Verbindungen der Formel IA-8 und zwei, drei, vier oder mehr Verbindungen ausgewählt aus der Gruppe der Verbindungen der Formeln V-3 und V-4.
- Das Medium enthält eine oder mehrere Verbindungen der Formeln IV-14 und /oder IV-15 in einer Gesamtkonzentration im Bereich von 2 % bis 20 %, besonders bevorzugt von 5 % bis 15 %, ganz besonders bevorzugt von 8 % bis 10 %.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

K bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie und nₒ den Brechungsindex. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der gesamten Patentanmeldung werden 1,4-Cyclohexylenringe und 1,4-Phenylenringe wie folgt dargestellt:

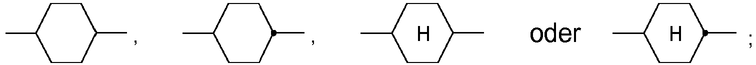

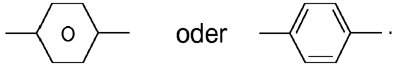

Bei den Cyclohexylenringen handelt es sich um trans-1,4-Cyclohexylenringe.

In der gesamten Patentanmeldung bedeuten (O)Alkyl oder (O)-Alkyl bzw. (O)Alkyl* oder (O)-Alkyl* entweder OAlkyl (Alkoxy) oder Alkyl bzw. OAlkyl* (Alkoxy*) oder Alkyl*. Weiterhin bedeuten in der gesamten Patentanmeldung (O)Alkenyl oder (O)-Alkenyl bzw. (O)Alkenyl* oder (O)-Alkenyl* entweder OAlkenyl (Alkenyloxy) oder Alkenyl bzw. OAlkenyl* (Alkenyloxy*) oder Alkenyl*.

In der gesamten Patentanmeldung sowie in den Ausführungsbeispielen sind die Strukturen der Flüssigkristallverbindungen durch Akronyme angegeben. Sofern nicht anders angegeben, erfolgt die Transformation in chemische Formeln gemäß der Tabellen 1-3. Alle Reste CₙH₂ₙ₊₁, CₘH₂ₘ₊₁, und C_{m'}H_{2m'+1} bzw. CₙH₂ₙ und CₘH₂ₘ sind geradkettige Alkylreste bzw. Alkylenreste jeweils mit n, m, m' bzw. z C-Atomen. n, m, m', z bedeuten jeweils unabhängig voneinander 1, 2, 3, 4, 5, 6, 7, 8, 9, 10, 11, 12, vorzugsweise 1, 2, 3, 4, 5 oder 6. In Tabelle 1 sind die Ringelemente der jeweiligen Verbindung codiert, in Tabelle 2 sind die Brückenglieder aufgelistet und in Tabelle 3 sind die Bedeutungen der Symbole für die linken bzw. rechten Seitenketten der Verbindungen angegeben.

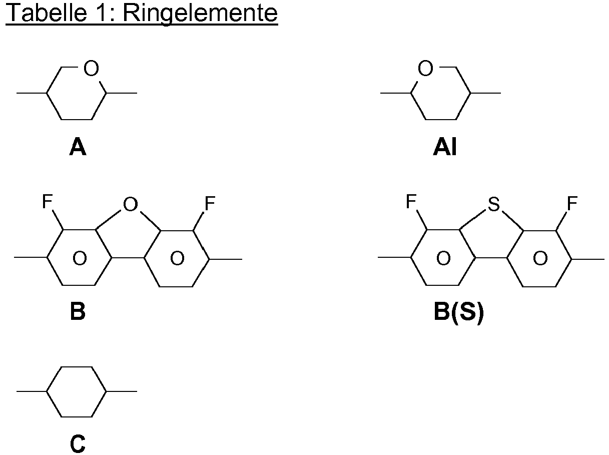

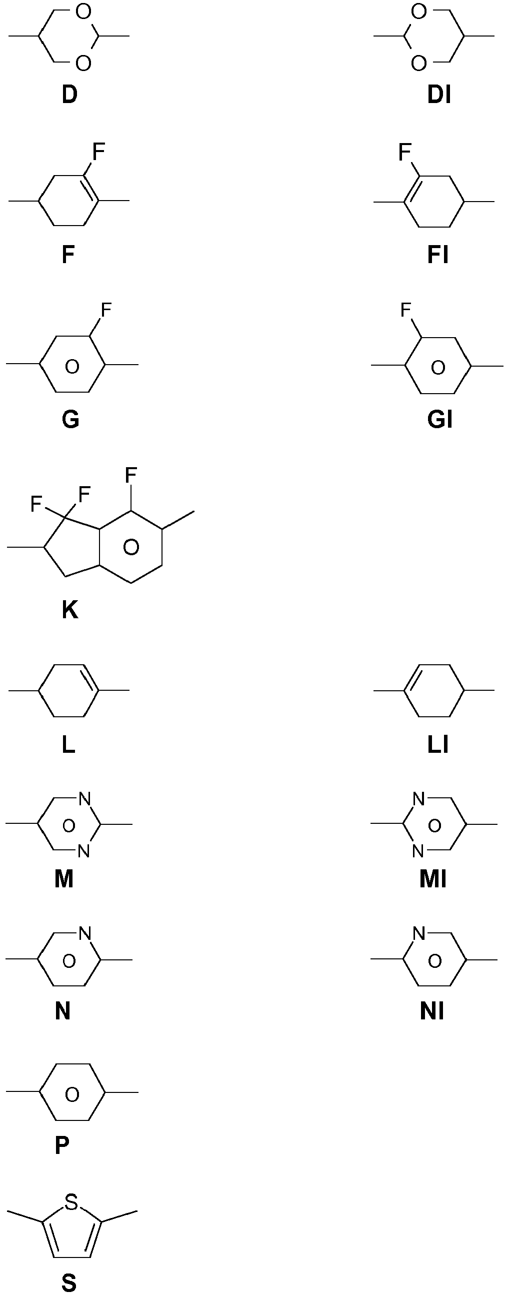

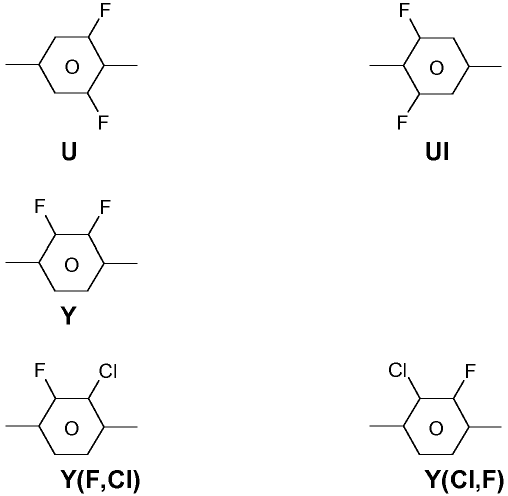

**Tabelle 2: Brückenglieder**

| | | | |
|---|---|---|---|
| **E** | -CH₂CH₂- | | |
| **V** | -CH=CH- | | |
| **T** | -C=C- | | |
| **W** | -CF₂CF₂- | | |
| **Z** | -COO- | **ZI** | -OCO- |
| **O** | -CH₂O- | **OI** | -OCH₂- |
| **Q** | -CF₂O- | **QI** | -OCF₂- |

**Tabelle 3: Seitenketten**

| Seiten kette links | | Seiten kette rechts | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH- CₙH₂ₙ- | **-Vn** | -CH=CH-CₙH₂ₙ₊₁ |
| **nVm-** | CₙH₂ₙ₊₁-CH=CH-CₘH₂ₘ- | **-nVm** | - CₙH₂ₙ-CH=CH-CₘH₂ₘ₊₁ |
| **N-** | N=C- | **-N** | -C=N |
| **F-** | F- | **-F** | -F |
| **CI-** | Cl- | **-Cl** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF₃ |
| **A-** | H-C=C- | **-A** | -C=C-H |

Vorzugsweise enthalten die erfindungsgemäßen Mischungen neben einer oder mehreren Verbindungen ausgewählt aus der Gruppe der Verbindungen der Formel IA, IB, IC, ID und II eine oder mehrere Verbindungen der nachfolgend genannten Verbindungen aus der Tabelle A.

**Tabelle A**

| |
|---|
| Folgende Abkürzungen werden verwendet: |
| (n, m, m', z: jeweils unabhängig voneinander 1, 2, 3, 4, 5, 6 oder 7; (O)CₘH₂ₘ₊₁ bedeutet OCₘH₂ₘ₊₁ oder CₘH₂ₘ₊₁) |
| 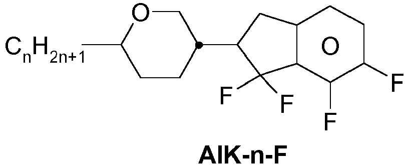 |
| 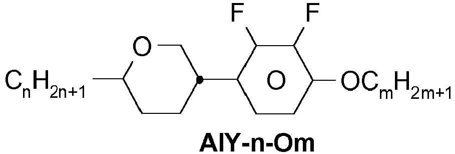 |
| 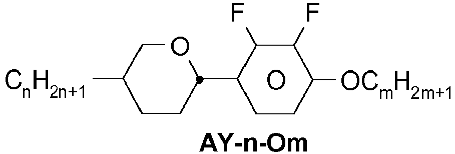 |
| 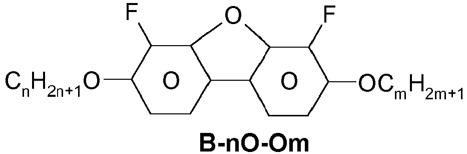 |
| 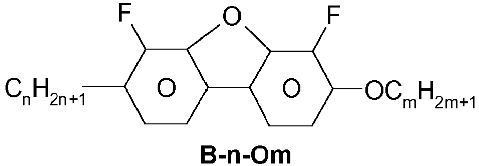 |
| 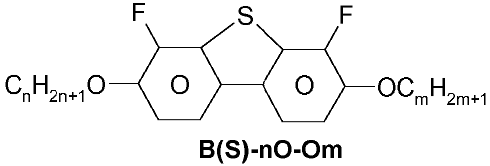 |
| 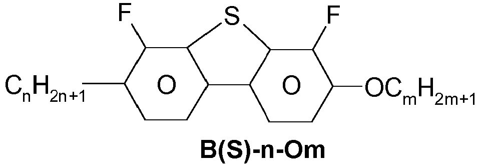 |
| 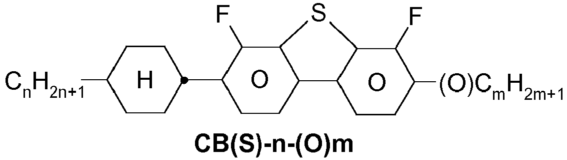 |
| 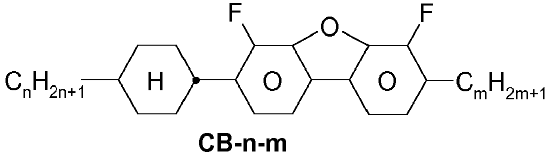 |
| 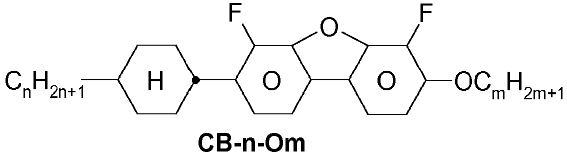 |
| 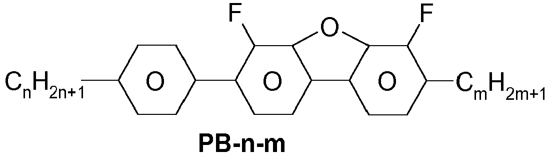 |
| 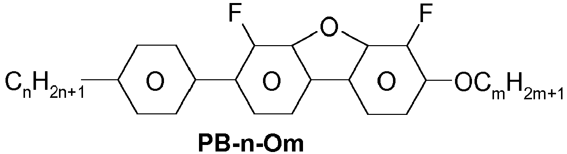 |
| 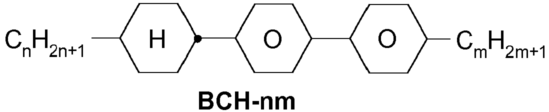 |
| 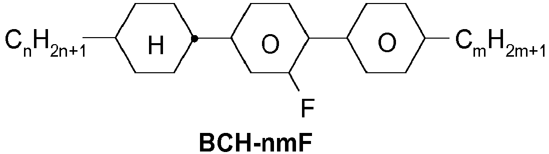 |
| 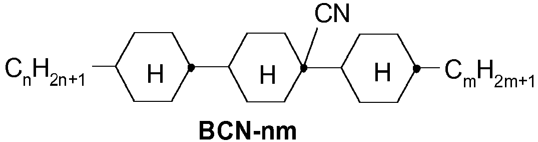 |
| 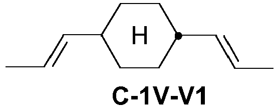 |
| 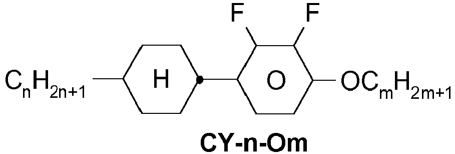 |
| 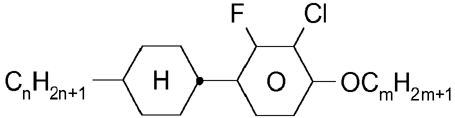 |
| 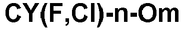 |
| 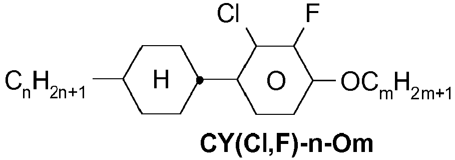 |
| 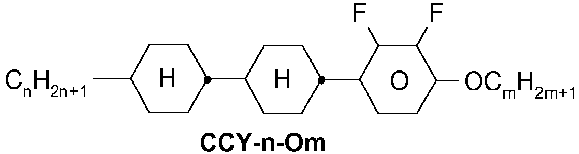 |
| 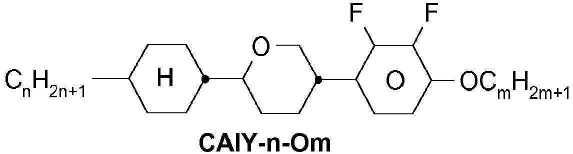 |
| 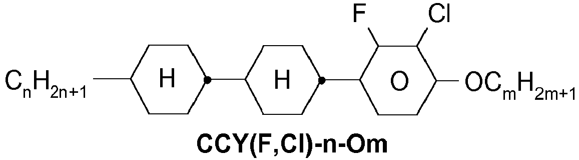 |
| 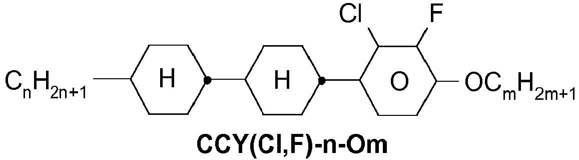 |
| 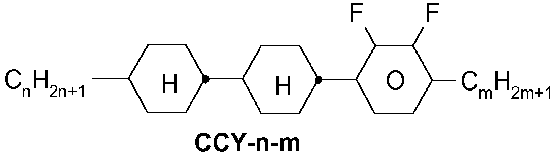 |
| 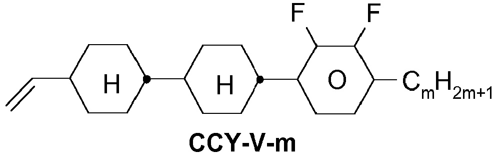 |
| 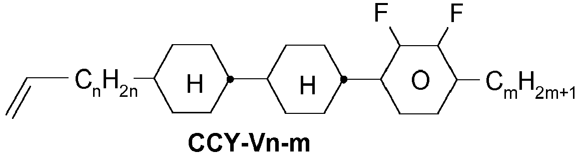 |
| 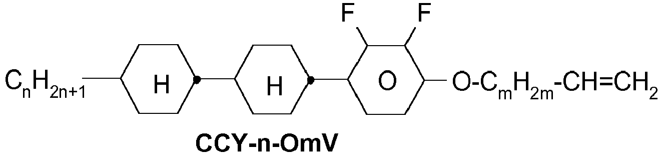 |
| 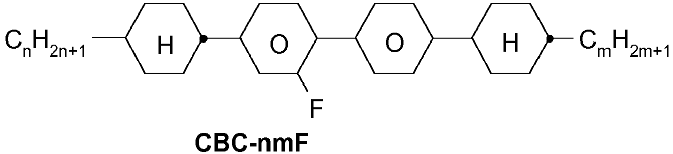 |
| 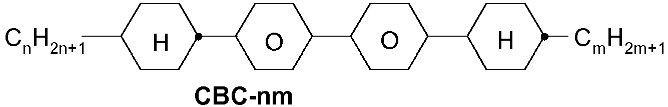 |
| 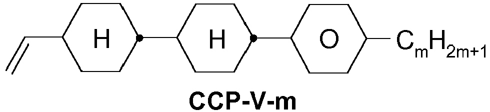 |
| 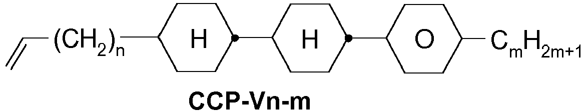 |
| 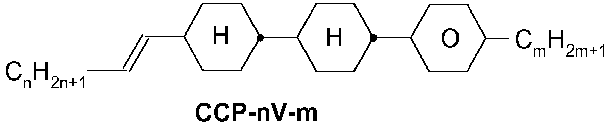 |
| 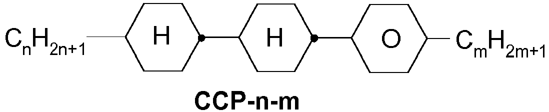 |
| 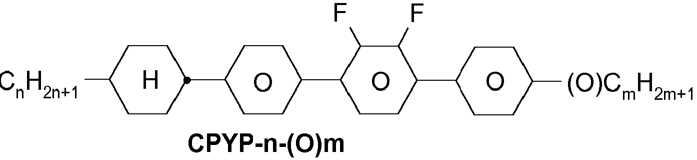 |
| 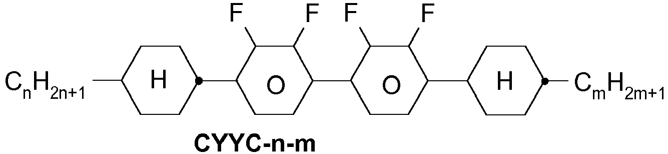 |
| 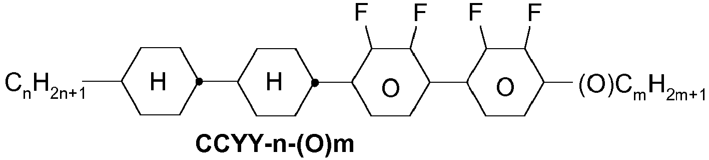 |
| 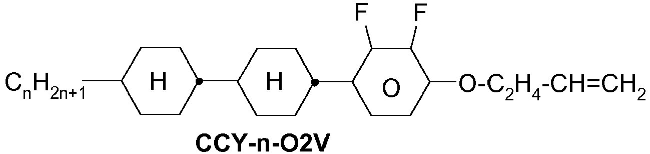 |
| 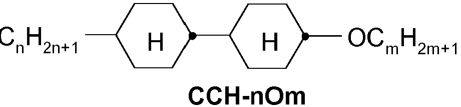 |
| 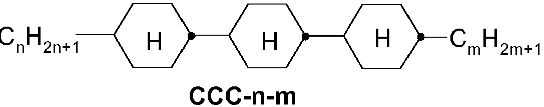 |
| 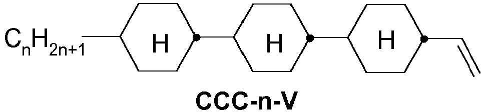 |
| 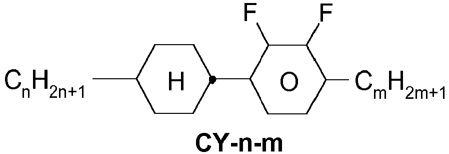 |
| 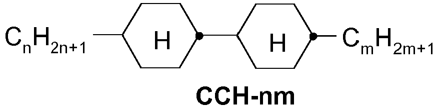 |
| 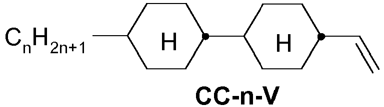 |
| 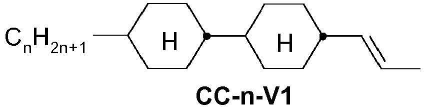 |
| 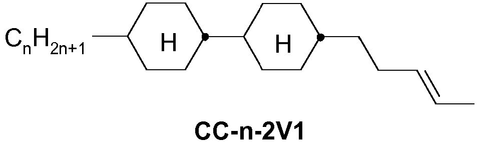 |
| 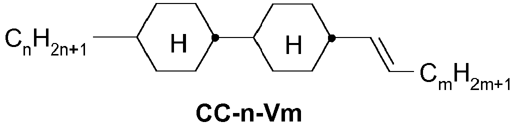 |
| 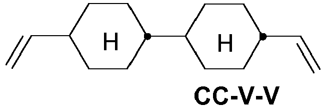 |
| 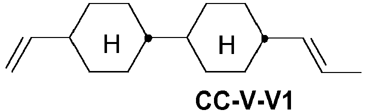 |
| 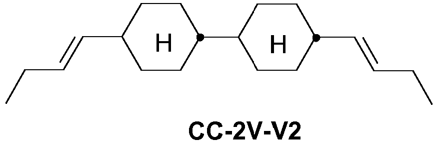 |
| 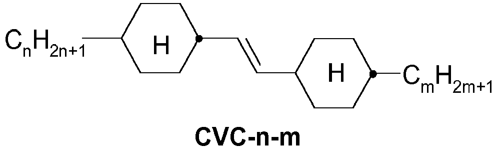 |
| 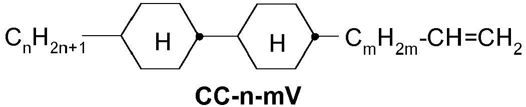 |
| 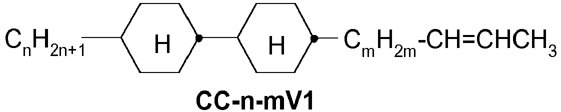 |
| 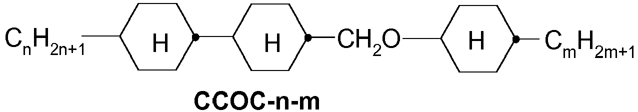 |
| 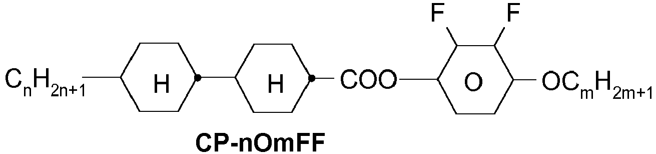 |
| 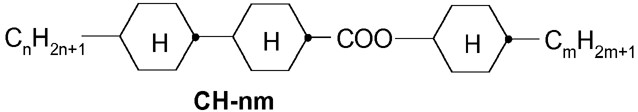 |
| 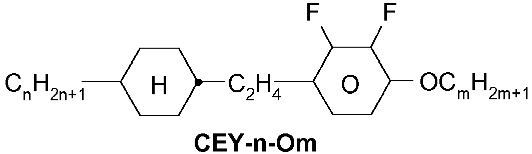 |
| 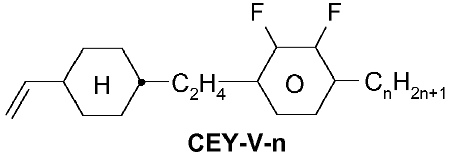 |
| 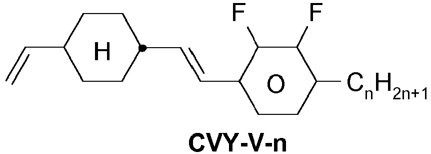 |
| 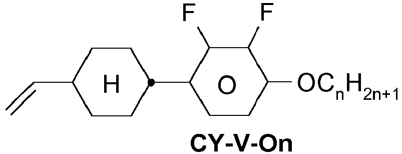 |
| 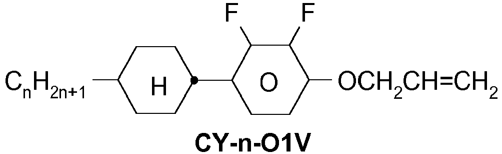 |
| 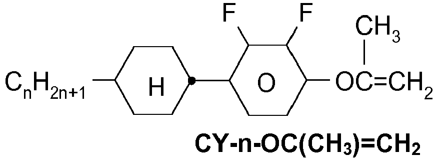 |
| 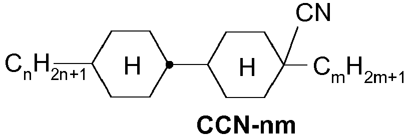 |
| 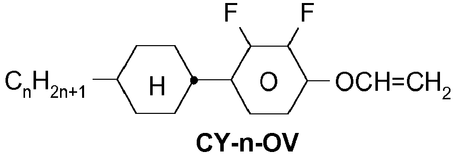 |
| 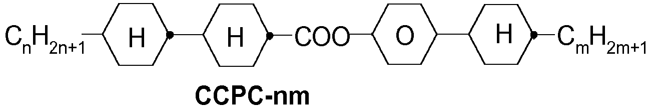 |
| 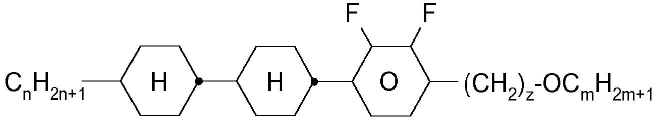 |
| 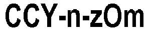 |
| 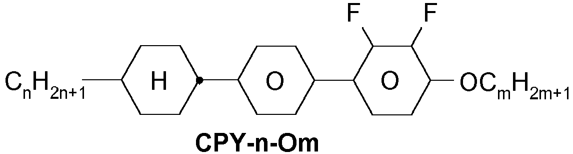 |
| 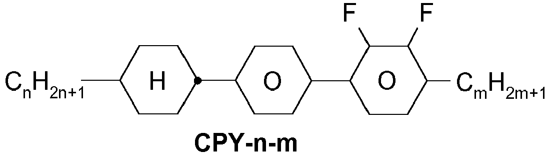 |
| 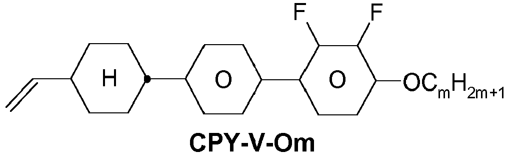 |
| 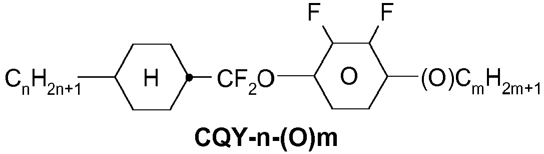 |
| 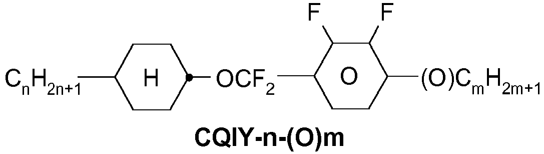 |
| 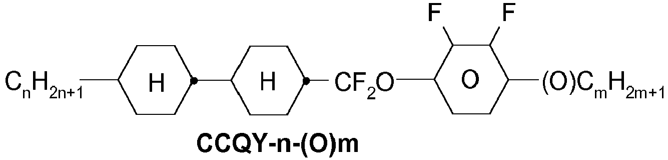 |
| 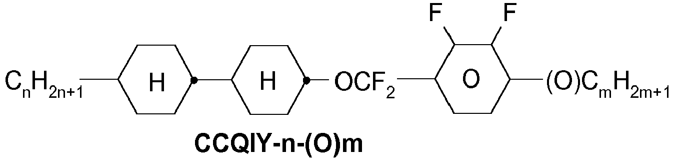 |
| 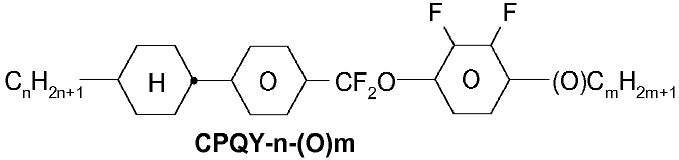 |
| 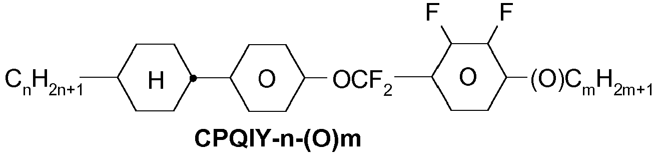 |
| 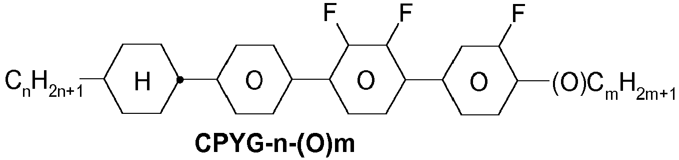 |
| 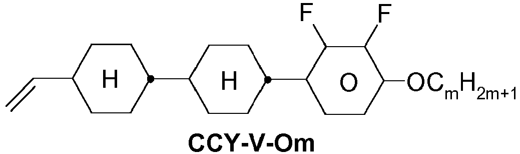 |
| 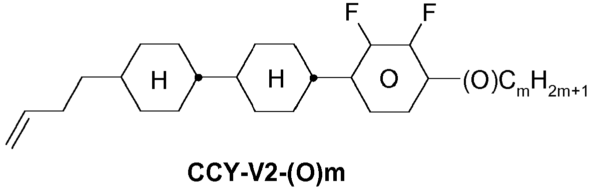 |
| 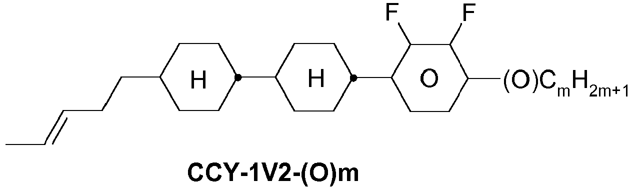 |
| 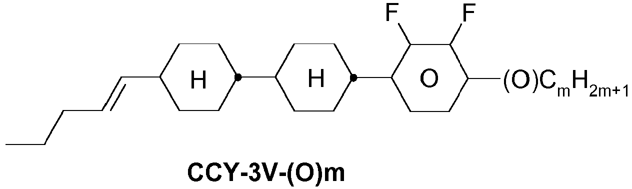 |
| 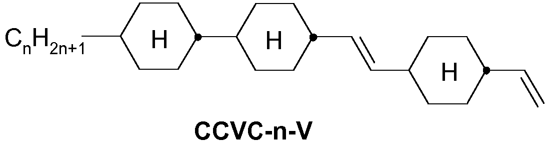 |
| 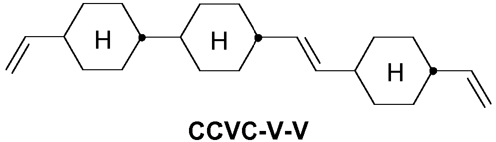 |
| 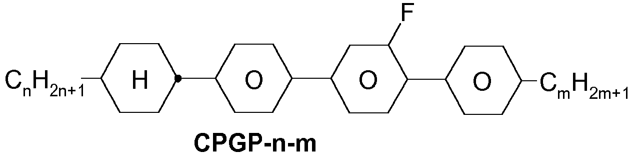 |
| 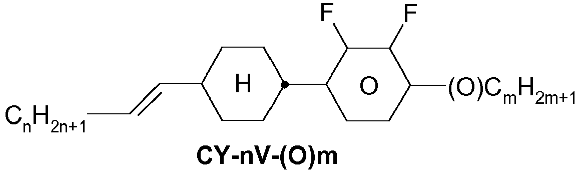 |
| 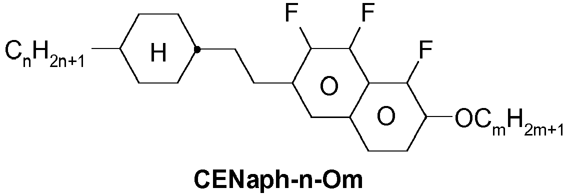 |
| 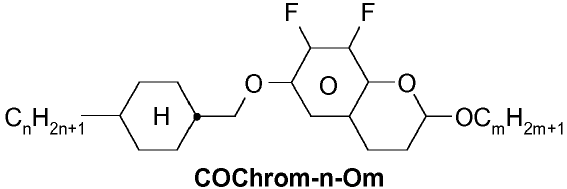 |
| 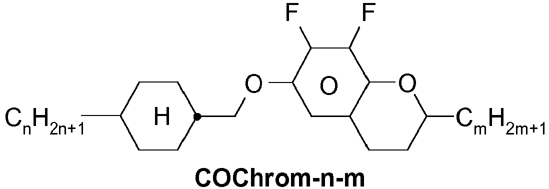 |
| 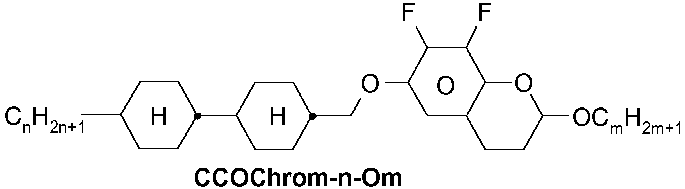 |
| 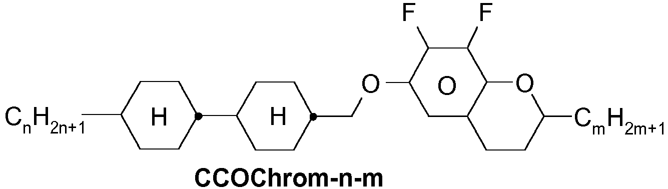 |
| 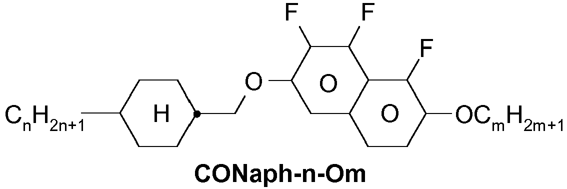 |
| 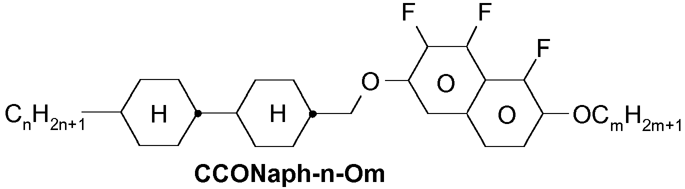 |
| 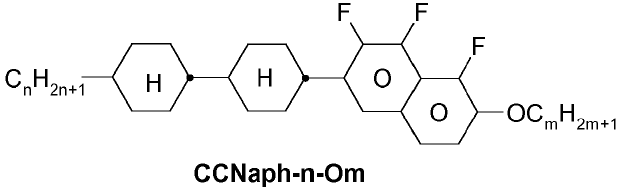 |
| 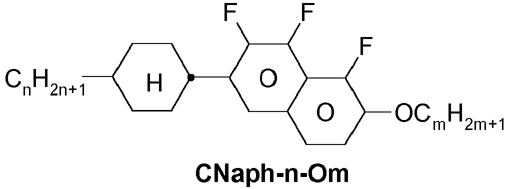 |
| 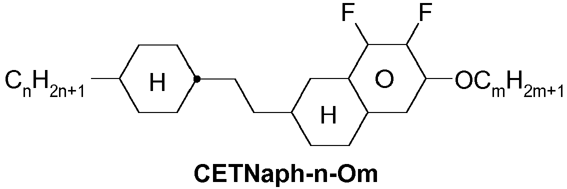 |
| 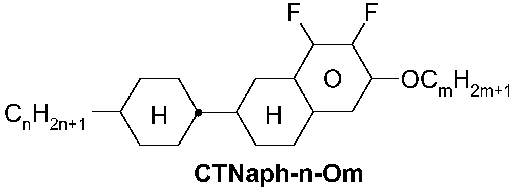 |
| 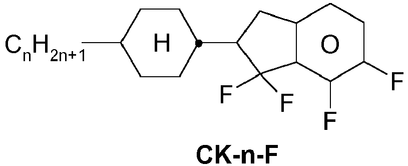 |
| 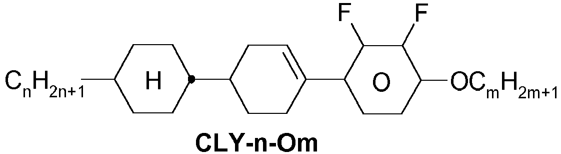 |
| 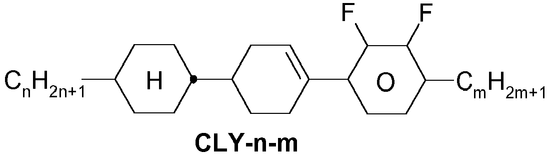 |
| 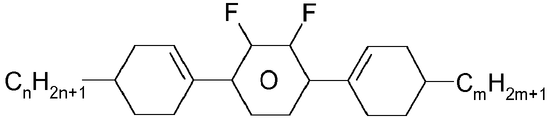 |
| 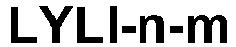 |
| 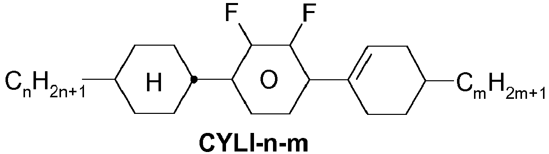 |
| 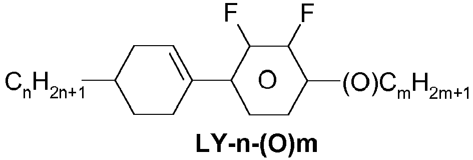 |
| 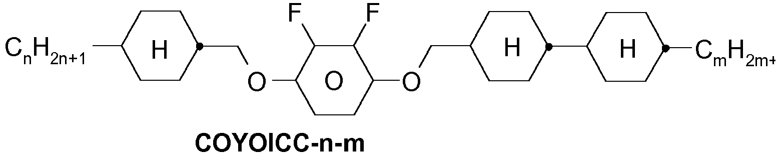 |
| 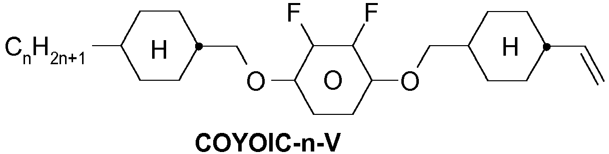 |
| 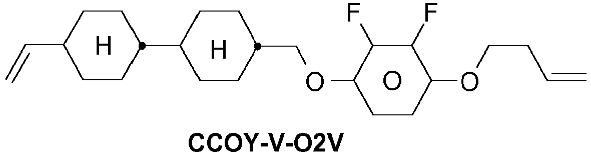 |
| 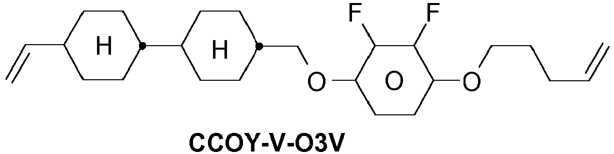 |
| 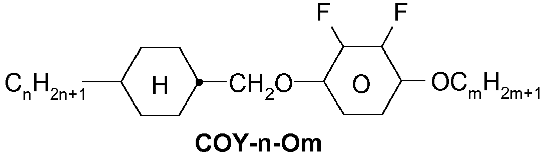 |
| 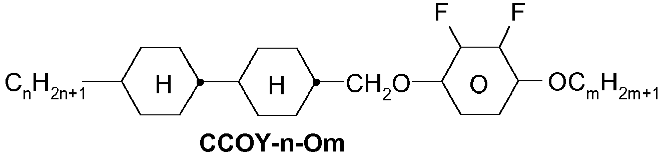 |
| 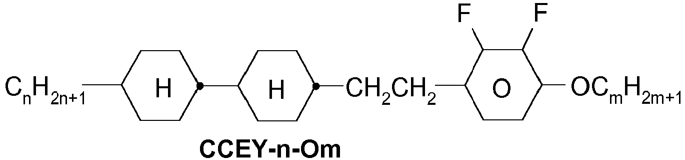 |
| 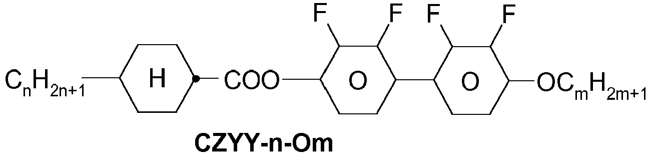 |
| 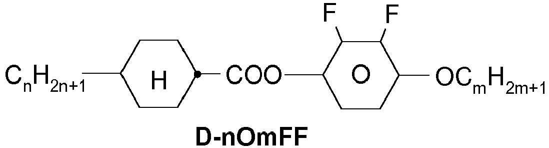 |
| 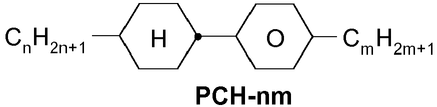 |
| 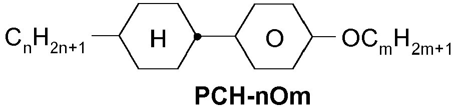 |
| 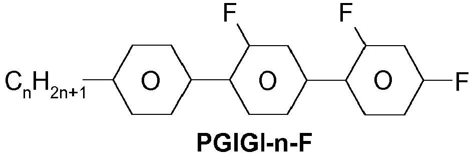 |
| 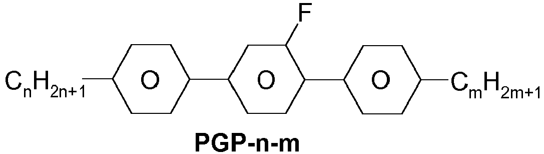 |
| 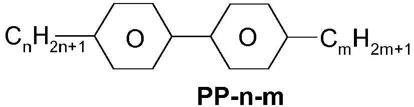 |
| 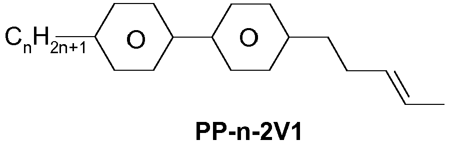 |
| 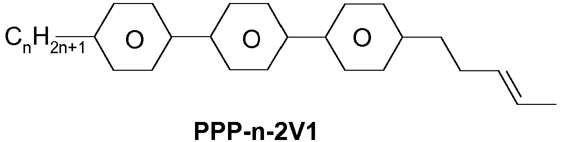 |
| 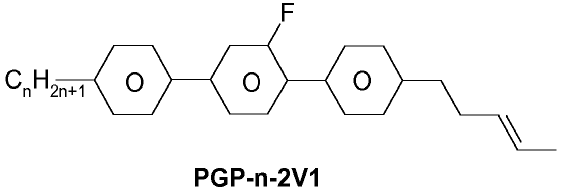 |
| 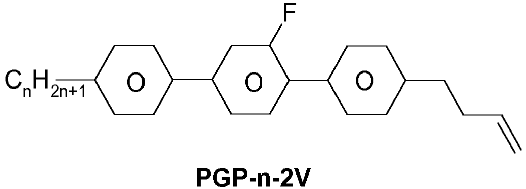 |
| 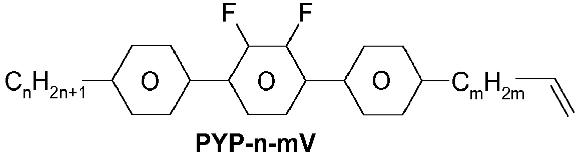 |
| 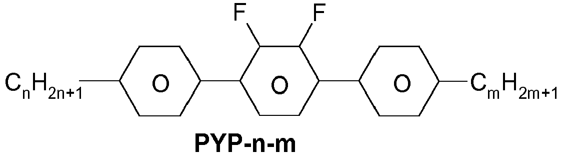 |
| 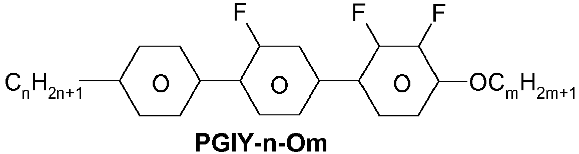 |
| 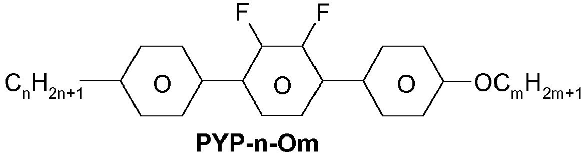 |
| 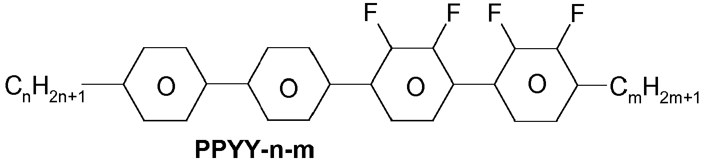 |
| 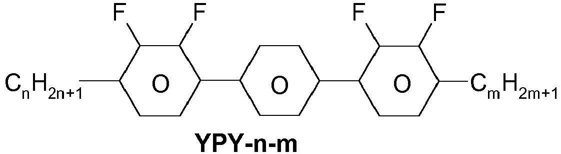 |
| 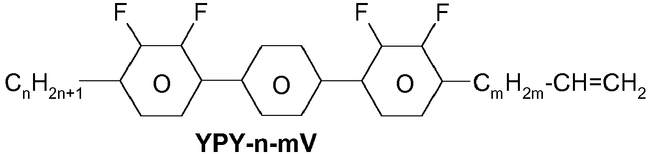 |
| 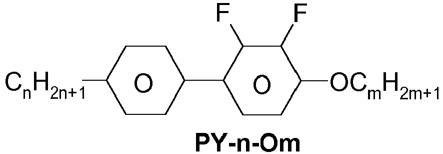 |
| 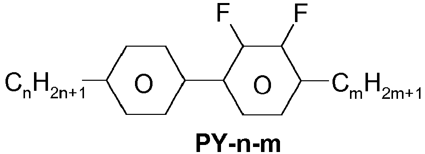 |
| 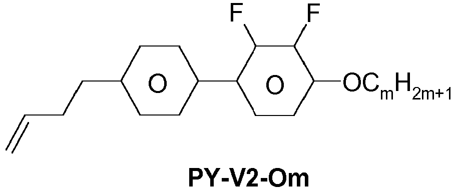 |
| 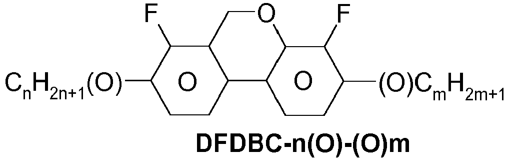 |
| 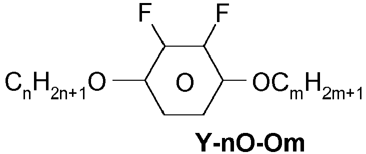 |
| 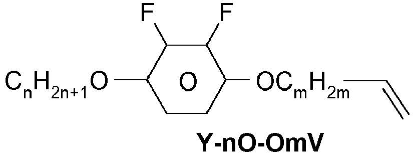 |
| 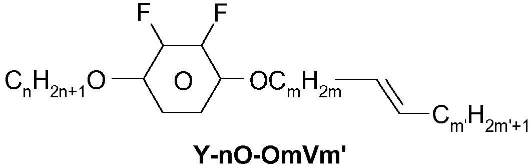 |
| 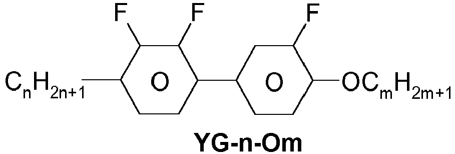 |
| 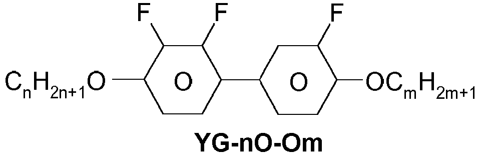 |
| 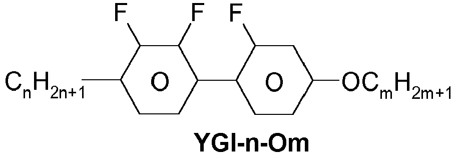 |
| 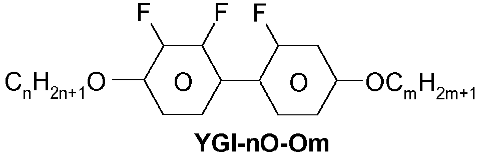 |
| 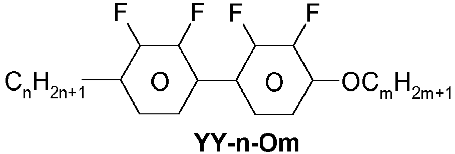 |
| 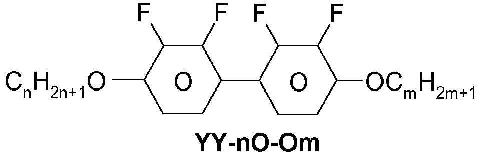 |

Bevorzugt enthalten die erfindungsgemäßen flüssigkristallinen Medien eine oder mehrere Verbindungen der Tabelle A.

Die Medien können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren, wie z.B. Phenole, HALS (hindered amine light stabilizers), z.B. Tinuvin 770 (= Bis(2,2,6,6-tetramethyl-4-piperidyl)sebacat), oder chirale Dotierstoffe zugesetzt werden. Geeignete Stabilisatoren für die erfindungsgemäßen Mischungen sind insbesondere solche die in Tabelle B gelistet sind.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

**Tabelle B**

| |
|---|
| In der Tabelle B werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,01-3 Gew.%, zugesetzt. |
| 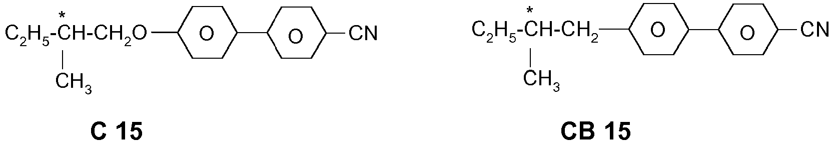 |
| 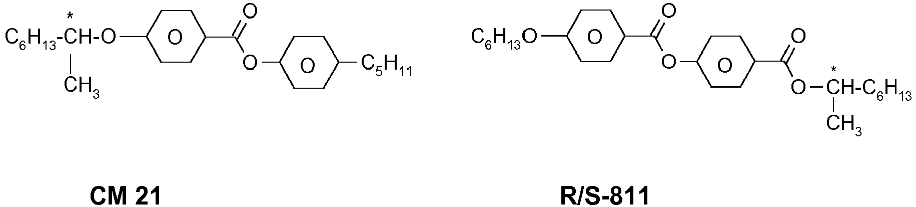 |
| 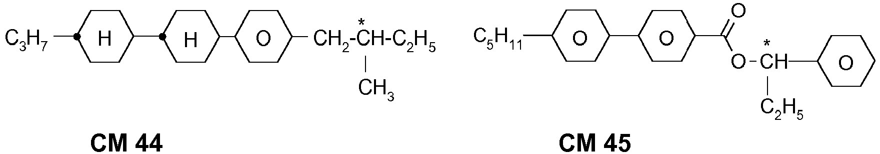 |
| 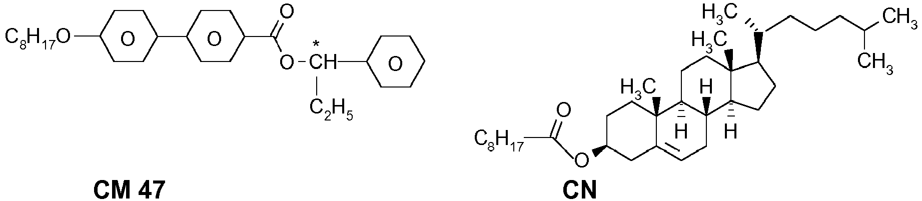 |
| 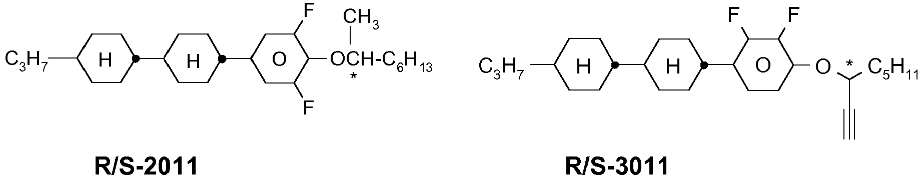 |
| 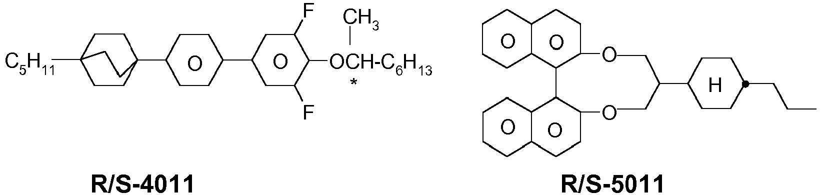 |
| 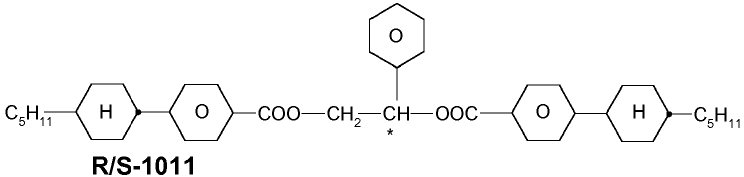 |

**Tabelle C**

| |
|---|
| Stabilisatoren, die beispielsweise den erfindungsgemäßen Mischungen in Mengen von 0-10 Gew.%, vorzugsweise 0,001-5 Gew.%, insbesondere 0,001-1 Gew.%, zugesetzt werden können, werden nachfolgend genannt. |
| 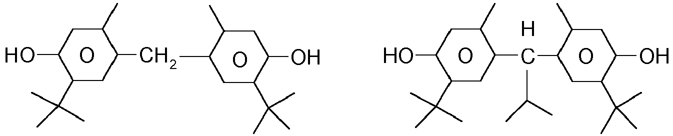 |
| 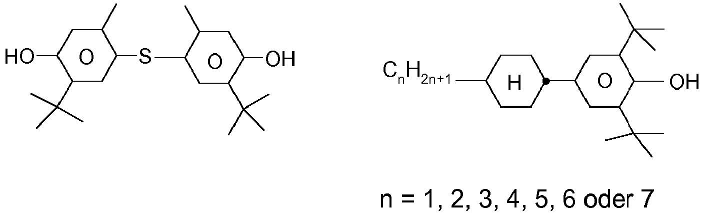 |
| 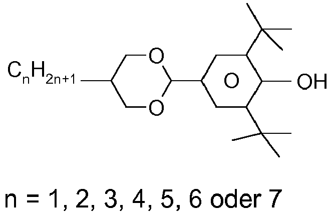 |
| 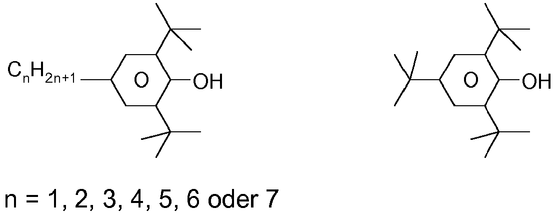 |
| 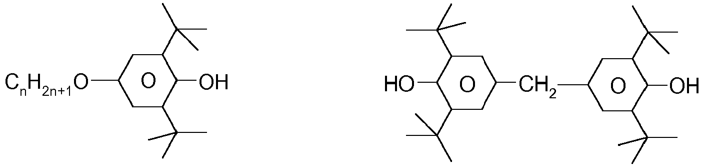 |
| 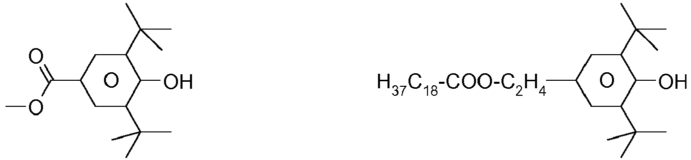 |
| 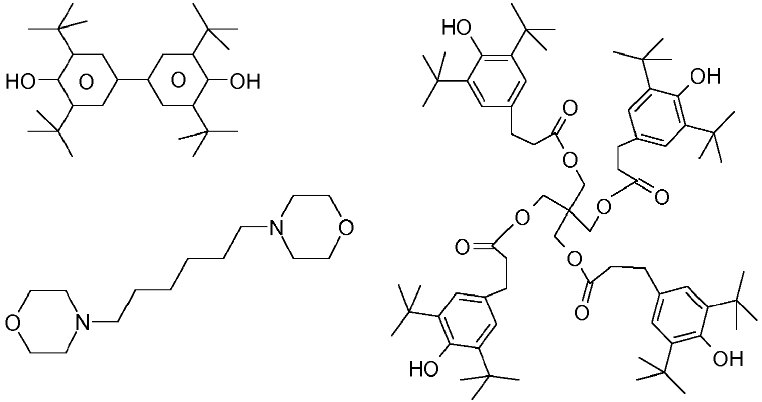 |
| 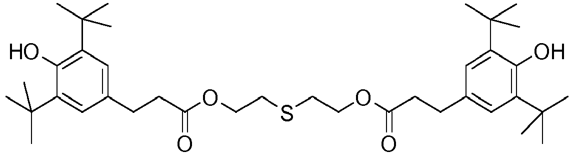 |
| 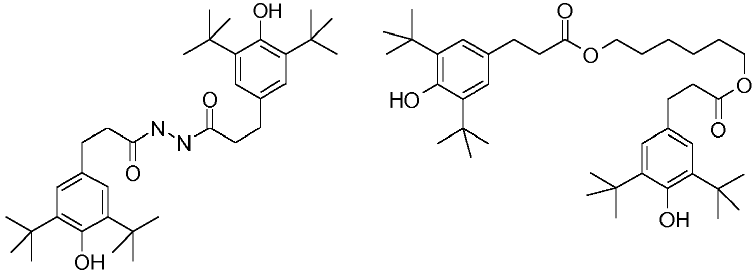 |
| 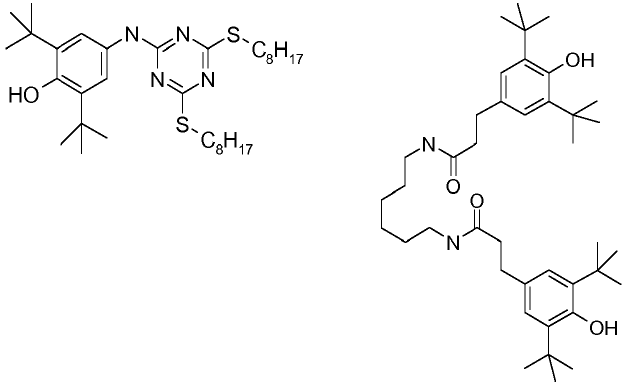 |
| 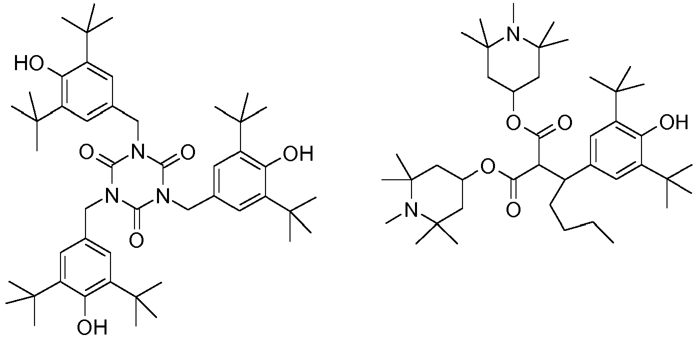 |
| 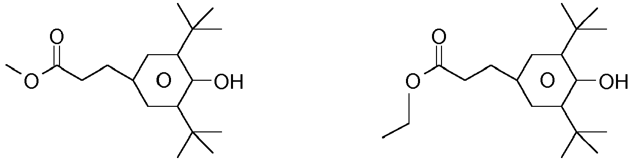 |
| 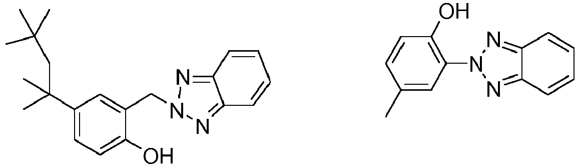 |
| 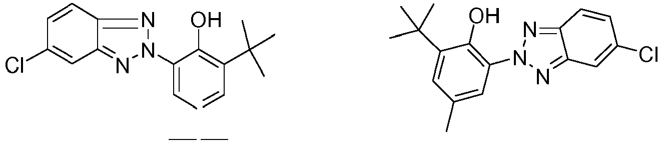 |
| 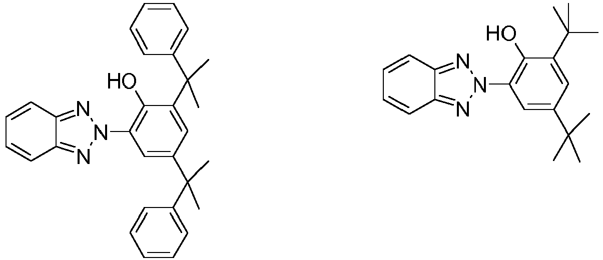 |
| 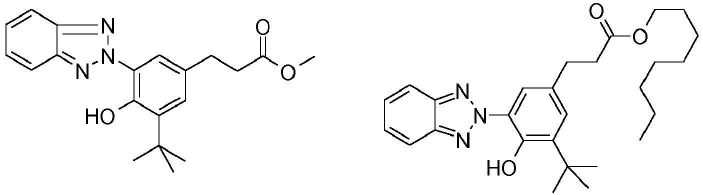 |
| 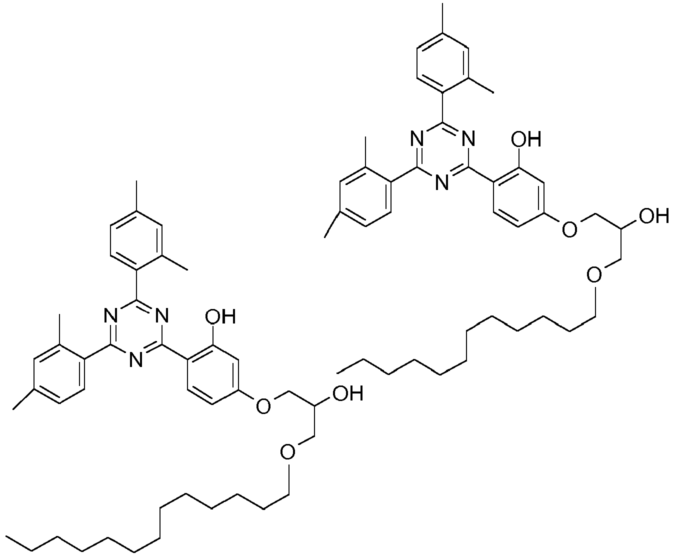 |
| 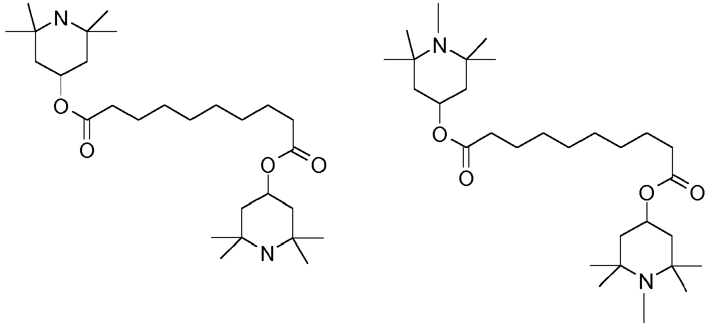 |
| 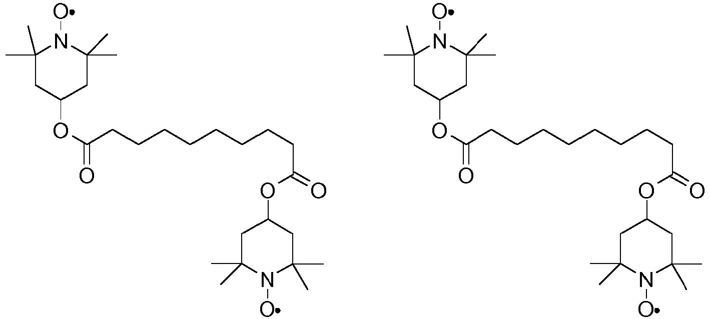 |
| 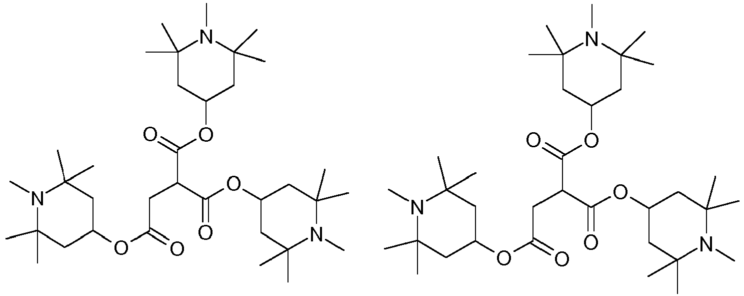 |
| 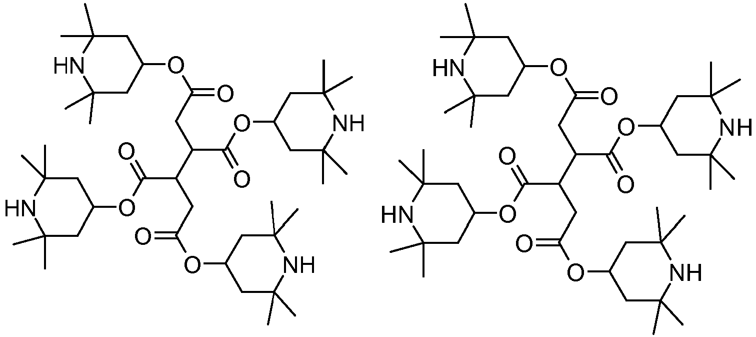 |
| 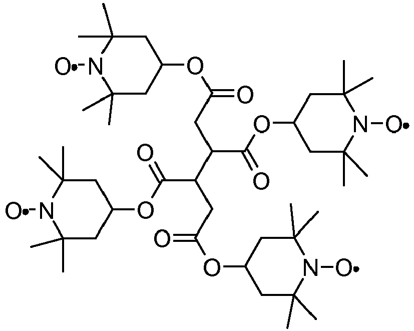 |
| 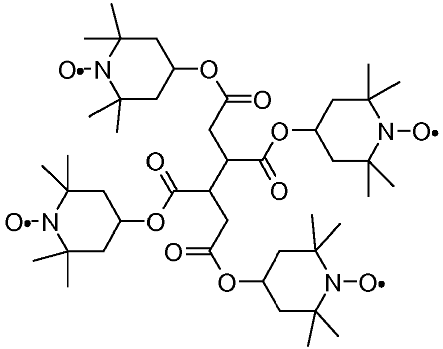 |
| 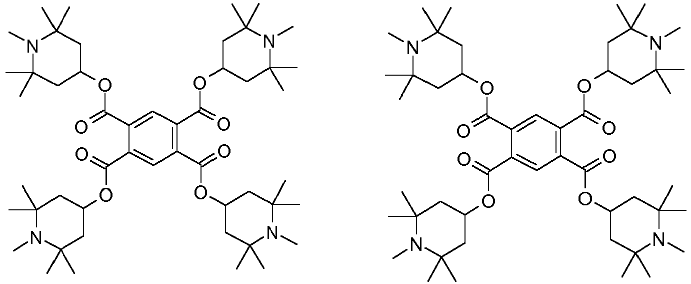 |
| 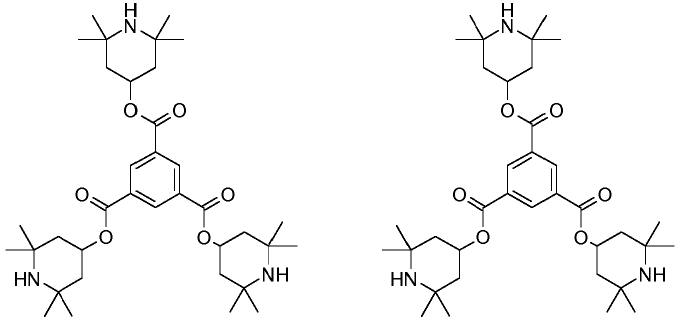 |
| 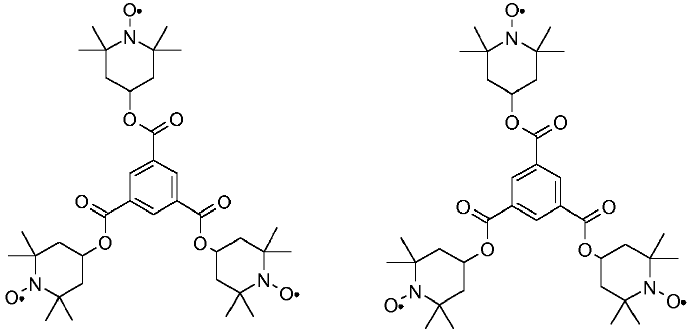 |
| 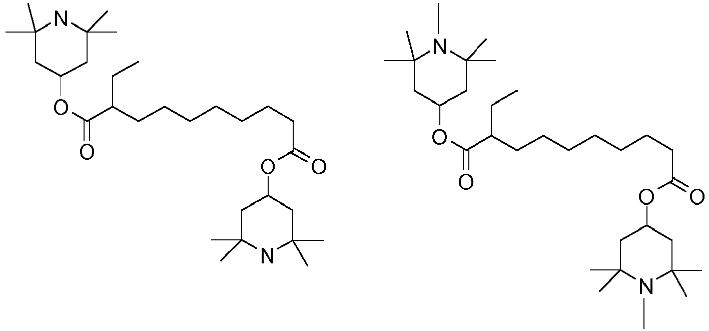 |
| 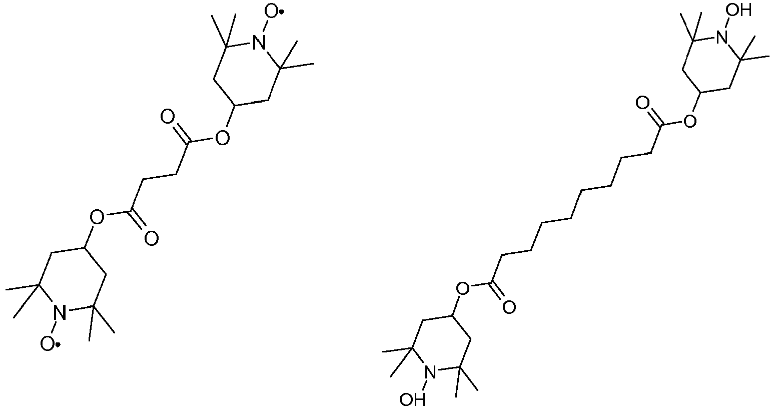 |

### Ausführungsbeispiele:

Die folgenden Beispiele sollen die Erfindung erläutern, ohne sie zu begrenzen. In den Beispielen bedeuten F. den Schmelzpunkt und K den Klärpunkt einer flüssigkristallinen Substanz in Grad Celsius; Siedetemperaturen sind mit Kp. bezeichnet. Es bedeuten ferner: K: kristallin-fester Zustand, S: smektische Phase (der Index bezeichnet den Phasentyp), N: nematischer Zustand, Ch: cholesterische Phase, I: isotrope Phase, T_{g}: Glastemperatur. Die zwischen zwei Symbolen stehende Zahl gibt die Umwandlungstemperatur in Grad Celsius an.

Als Hostmischung zur Bestimmung der optischen Anisotropie Δn der Verbindungen der Formeln IA wird die Verkaufsmischung ZLI-4792 (Fa. Merck KGaA) verwendet. Für die Bestimmung der dielektrischen Anisotropie Δε wird die Verkaufsmischung ZLI-2857 verwendet. Aus der Änderung der Dielektrizitätskonstanten der Hostmischung nach Zugabe der zu untersuchenden Verbindung und Extrapolation auf 100 % der eingesetzten Verbindung werden die physikalischen Daten der zu untersuchenden Verbindung erhalten. Die zu untersuchende Verbindung wird in Abhängigkeit der Löslichkeit in der Regel zu 10 % in der Hostmischung gelöst.

Sofern nichts anderes angegeben ist, bedeuten Angaben von Teilen oder Prozent Gewichtsteile bzw. Gewichtsprozent.

Vor- und nachstehend bedeuten:
Vₒ Schwellenspannung, kapazitiv [V] bei 20°C,
nₑ außerordentlicher Brechungsindex bei 20°C und 589 nm,
nₒ ordentlicher Brechungsindex bei 20°C und 589 nm,
Δnoptische Anisotropie bei 20°C und 589 nm,
ε_{⊥} dielektrische Permittivität senkrecht zum Direktor bei 20°C und 1 kHz,
ε∥ dielektrische Permittivität parallel zum Direktor bei 20°C und 1 kHz,
Δε dielektrische Anisotropie bei 20°C und 1 kHz,
Kp., T(N,I) Klärpunkt [°C],
γ₁ Rotationsviskosität gemessen bei 20 °C [mPa·s], bestimmt nach dem Rotationsverfahren in einem magnetischen Feld,
K₁ elastische Konstante, "splay"-Deformation bei 20°C [pN],
K₂ elastische Konstante, "twist"-Deformation bei 20°C [pN],
K₃ elastische Konstante, "bend"-Deformation bei 20°C [pN],
LTS Tieftemperaturstabilität [Low temperature stability (nematische Phase)], bestimmt in Testzellen.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten Tg = Glaszustand, K = kristalliner Zustand, N = nematische Phase, S = smektische Phase und I = isotrope Phase. Die Angaben zwischen diesen Symbolen stellen die Übergangstemperaturen dar.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung verwendete Anzeige besteht aus zwei planparallelen Glasträgerplatten im Abstand von 20 □m, welche auf den Innenseiten jeweils ein Elektrodenschicht sowie eine darüberliegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 □m, welche auf den Innenseiten jeweils eine Elektrodenschicht sowie eine darüberliegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei gleichzeitig eine Spannung an die Anzeige angelegt wird (üblicherweise 10 V bis 30 V Wechselstrom, 1 kHz). In den Beispielen wird, falls nicht anders angegeben, eine Quecksilberdampflampe mit 50 mW/cm² verwendet, die Intensität wird mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0,3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d ≈ 6 µm). Der HR-Wert wird nach 5 min bei 100 °C vor und nach 2h UV-Belastung (suntest) bei 1 V, 60 Hz, 64 µs pulse bestimmt (Messgerät: Autronic-Melchers VHRM-105).

Zur Untersuchung der Tieftemperaturstabilität, auch als "LTS" (low temperature stability) bezeichnet, d.h. der Stabilität der FK-Mischung gegen spontane Auskristallisation einzelner Komponenten bei tiefen Temperaturen, werden Fläschchen mit 1 g Flüssigkristall-Mischung bei der angegebenen Temperatur, beispielsweise -20°C eingelagert, und es wird regelmäßig überprüft, ob die Mischungen auskristallisiert waren.

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

Die nachfolgenden Mischungsbeispiele mit negativer dielektrischer Anisotropie sind aufgrund der überraschend hohen Klärpunkte und hervorragenden LTS insbesondere geeignet für Lichtventile für Beleuchtungseinrichtungen für Kraftfahrzeuge, die mindestens eine homöotrope Orientierungsschicht aufweisen, sowie VA-Displays.

Sie sind außerdem geeignet für Lichtventile und Flüssigkristallanzeigen mit planarer Orientierung, die auf dem IPS- oder FFS-Effekt basieren.

### Mischungsbeispiele

### Vergleichsbeispiel M1

| | | | |
|---|---|---|---|
| CCY-3-O2 | 6,0 % | T_{(N,I)}. [°C]: | 124,5 |
| CCY-3-O3 | 6,0 % | Δn (20°C, 589.3 nm): | 0,1595 |
| CCY-4-O2 | 6,0 % | Δε (20°C, 1 kHz): | -5,3 |
| CPY-2-O2 | 12,0 % | | |
| CPY-3-O2 | 12,0 % | K₁ (20°C) [pN]: | 30,8 |
| PYP-2-3 | 10,0 % | K₃ (20°C) [pN]: | 39,6 |
| PYP-2-4 | 10,0% | | |
| CCH-34 | 10,0 % | Vo (20°C) [V] | 2,89 |
| CCH-35 | 6,0 % | | |
| CCP-3-1 | 8,0 % | | |
| B(S)-2O-O4 | 7,0 % | | |
| B(S)-2O-O5 | 7,0 % | | |

### Vergleichsbeispiel M2

| | |
|---|---|
| CCY-3-O2 | 6,0 % |
| CCY-3-O3 | 6,0 % |
| CCY-4-O2 | 6,0 % |
| CPY-2-O2 | 14,0 % |
| CPY-3-O2 | 14,0 % |
| CCH-34 | 10,0 % |
| CCH-35 | 6,0 % |
| CCP-3-1 | 8,0 % |
| BCH-32 | 8,0 % |
| BCH-52 | 8,0 % |
| B(S)-2O-O4 | 7,0 % |
| B(S)-2O-O5 | 7,0 % |

### Beispiel M3

| | | | |
|---|---|---|---|
| CY-3-O4 | 16,0 % | T_{(N,I)}. [°C]: | 137,2 |
| CY-5-O4 | 7,0 % | Δn (20°C, 589.3 nm):: | 0,1480 |
| CCY-3-O2 | 6,0 % | | |
| CCY-3-O3 | 6,0 % | | |
| CCY-4-O2 | 6,0 % | K₁ (20°C) [pN]: | 22,1 |
| CPY-2-O2 | 12,0 % | K₃ (20°C) [pN]: | 24,3 |
| CPY-3-O2 | 12,0 % | | |
| CCP-3-1 | 8,0 % | Vo (20°C) [V] | 2,08 |
| CBC-33F | 3,0 % | | |
| CBC-53F | 6,0 % | | |
| CPGP-5-2 | 4,0 % | | |
| CPGP-5-3 | 4,0 % | | |
| B(S)-2O-O4 | 5,0 % | | |
| B(S)-2O-O5 | 5,0 % | | |

### Beispiel M4

| | | | |
|---|---|---|---|
| CY-3-O4 | 20,0 % | T_{(N,I)}. [°C]: | 143,2 |
| CCY-3-O2 | 6,0 % | Δn (20°C, 589.3 nm): | 0,1524 |
| CCY-3-O3 | 6,0 % | Δε (20°C, 1 kHz): | -4,6 |
| CCY-4-O2 | 6,0 % | | |
| CPY-2-O2 | 12,0 % | K₁ (20°C) [pN]: | 21,9 |
| CPY-3-O2 | 12,0 % | K₃ (20°C) [pN]: | 24,2 |
| CCH-34 | 5,0 % | | |
| CCP-3-1 | 8,0 % | Vo (20°C) [V] | 2,43 |
| CBC-33F | 3,0 % | | |
| CBC-53F | 6,0 % | | |
| CPGP-5-2 | 5,0 % | | |
| CPGP-5-3 | 5,0 % | | |
| PGIY-2-O4 | 6,0 % | | |

### Vergleichsbeispiel M5

| | | | |
|---|---|---|---|
| CY-3-O2 | 4,0 % | T_{(N,I)}. [°C]: | 122,0 |
| CY-3-O4 | 8,0% | Δn (20°C, 589.3 nm): | 0,1778 |
| CCY-3-O2 | 6,0 % | Δε (20°C, 1 kHz): | -4,1 |
| CCY-3-O3 | 6,0 % | | |
| CCY-4-O2 | 6,0 % | K₁ (20°C) [pN]: | 19,1 |
| CPY-2-O2 | 12,0 % | K₃ (20°C) [pN]: | 21,1 |
| CPY-3-O2 | 12,0 % | | |
| PYP-2-3 | 12,0 % | Vo (20°C) [V] | 2,08 |
| PYP-2-4 | 12,0 % | | |
| CC-4-V | 3,0 % | LTS (-30°C) [h] | 1000 |
| CCP-V-1 | 9,0 % | LTS (-40°C) [h] | 600 |
| CPTP-301 | 5,0 % | | |
| PTP-102 | 5,0 % | | |

### Beispiel M6

| | | | |
|---|---|---|---|
| CY-3-02 | 20,0 % | T_{(N,I)}. [°C]: | 137,3 |
| CY-5-04 | 9,0 % | Δn (20°C, 589.3 nm): | 0,1382 |
| CCY-3-O2 | 6,0 % | Δε (20°C, 1 kHz): | -4,8 |
| CCY-3-O3 | 6,0 % | | |
| CCY-4-O2 | 6,0 % | K₁ (20°C) [pN]: | 21,0 |
| CPY-2-O2 | 12,0 % | K₃ (20°C) [pN]: | 24,2 |
| CPY-3-O2 | 12,0 % | | |
| CCP-3-1 | 8,0 % | V₀ (20°C) [V] | 2,37 |
| CBC-33F | 4,0 % | | |
| CBC-53F | 7,0 % | LTS (-30°C) [h] | 1008 |
| CPGP-5-2 | 5,0 % | | |
| CPGP-5-3 | 5,0 % | | |

### Beispiel M7

| | | | |
|---|---|---|---|
| CY-3-02 | 8,0 % | T_{(N,I)}. [°C]: | 134,7 |
| CY-5-04 | 8,0 % | Δn (20°C, 589.3 nm): | 0,1623 |
| CCY-3-O2 | 6,0 % | Δε (20°C, 1 kHz): | -4,5 |
| CCY-3-O3 | 6,0 % | | |
| CCY-4-O2 | 6,0 % | K₁ (20°C) [pN]: | 20,9 |
| CPY-2-O2 | 12,0 % | K₃ (20°C) [pN]: | 22,9 |
| CPY-3-O2 | 12,0 % | | |
| PYP-2-3 | 12,0 % | V₀ (20°C) [V] | 2,39 |
| PYP-2-4 | 12,0 % | | |
| CCP-3-1 | 8,0 % | LTS (-20°C) [h] | 744 |
| CBC-33F | 4,0 % | LTS(-40°C) [h] | 600 |
| CBC-53F | 6,0 % | | |

### Beispiel M8

| | | | |
|---|---|---|---|
| CY-3-04 | 8,0 % | T_{(N,I)}. [°C]: | 138,0 |
| CY-5-04 | 8,0 % | Δn (20°C, 589.3 nm): | 0,1610 |
| CCY-3-O2 | 6,0 % | Δε (20°C, 1 kHz): | -4,4 |
| CCY-3-O3 | 6,0 % | | |
| CCY-4-O2 | 6,0 % | K₁ (20°C) [pN]: | 21,0 |
| CPY-2-O2 | 12,0 % | K₃ (20°C) [pN]: | 23,8 |
| CPY-3-O2 | 12,0 % | | |
| PYP-2-3 | 10,0 % | V₀ (20°C) [V] | 2,45 |
| PYP-2-4 | 12,0 % | | |
| CCP-3-1 | 8,0 % | LTS(-30°C) [h] | 528 |
| CBC-33F | 5,0 % | LTS(-40°C) [h] | 384 |
| CBC-53F | 7,0 % | | |

### Beispiel M9

| | | | |
|---|---|---|---|
| CY-3-04 | 7,0 % | T_{(N,I)}. [°C]: | 149,5 |
| CCY-3-O2 | 6,0 % | Δn (20°C, 589.3 nm): | 0,1754 |
| CCY-3-O3 | 6,0 % | Δε (20°C, 1 kHz): | -3,6 |
| CCY-4-O2 | 6,0 % | | |
| CPY-2-O2 | 12,0 % | K₁ (20°C) [pN]: | 22,2 |
| CPY-3-O2 | 12,0 % | K₃ (20°C) [pN]: | 25,5 |
| PYP-2-3 | 10,0 % | | |
| PYP-2-4 | 10,0 % | V₀ (20°C) [V] | 2,81 |
| CC-4-V | 3,0 % | | |
| CCP-V-1 | 9,0% | LTS (-30°C) [h] | 1450 |
| CPTP-301 | 5,0 % | LTS (-40°C) [h] | 240 |
| PTP-102 | 3,0 % | | |
| CBC-33F | 4,0 % | | |
| CBC-53F | 7,0 % | | |

### Vergleichsbeispiel M10

| | | | |
|---|---|---|---|
| BCH-32 | 9,0 % | T_{(N,I)}. [°C]: | 132,2 |
| CBC-33 | 1,5 % | Δn (20°C, 589.3 nm): | 0,1674 |
| CBC-33F | 3,0 % | | |
| CBC-53F | 1,5 % | | |
| CCP-3-1 | 3,5 % | | |
| CCY-3-O1 | 2,0 % | | |
| CCY-3-O2 | 6,0 % | | |
| CCY-3-O3 | 5,5 % | | |
| CCY-4-O2 | 6,0 % | | |
| CCY-5-02 | 6,0 % | | |
| CPY-2-O2 | 9,0 % | | |
| CPY-3-O2 | 9,0 % | | |
| CY-3-O4 | 3,0 % | | |
| CY-5-O4 | 5,0 % | | |
| PY-1-O4 | 3,5 % | | |
| PY-4-O2 | 3,5 % | | |
| PYP-2-3 | 11,5 % | | |
| PYP-2-4 | 11,5 % | | |

### Vergleichsbeispiel M11

Beispiel M11 besteht aus 91,84 % des Mediums aus Beispiel M10, 8,0% des reaktiven Mesogens RM-1 und 0,16 % des Photoinitiators Irgacure 907^{®}. Dieses Medium ist insbesondere zur Herstellung von Lichtventilen des PDLC-Typs geeignet.

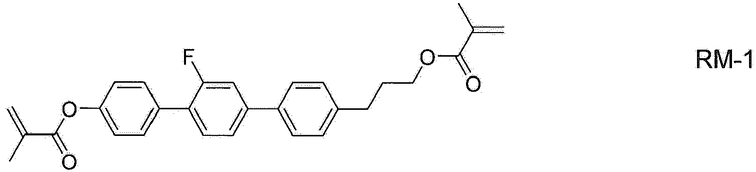

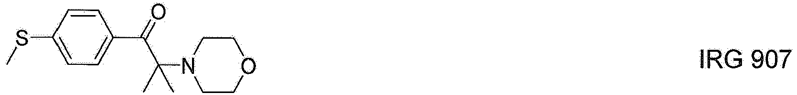

## Patentansprüche

1. Flüssigkristallines Medium, **dadurch gekennzeichnet, daß** es eine oder mehrere Verbindungen in einer Gesamtkonzentration von 65% oder mehr ausgewählt aus der Gruppe der Verbindungen der Formeln IA, IB, IC, ID und II 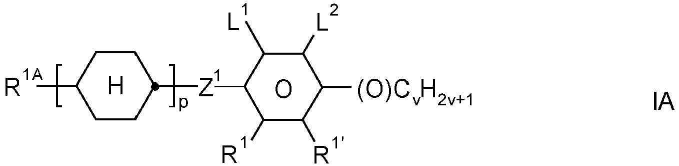 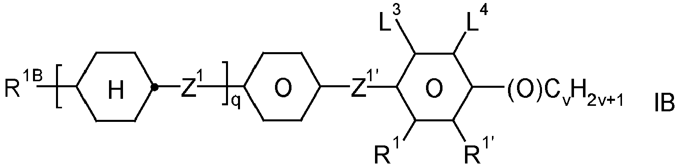 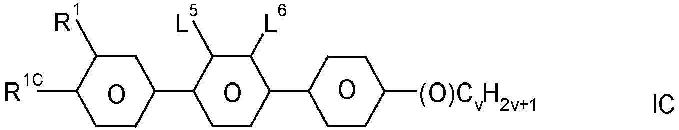 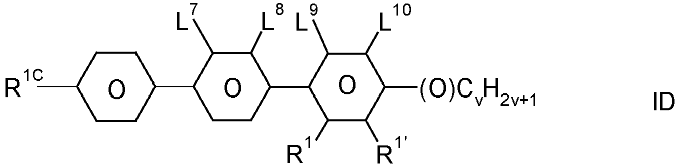 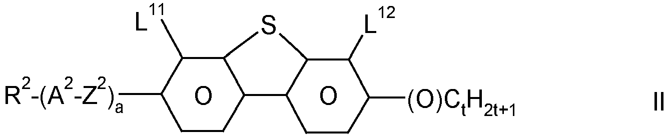 worin
R^{1A}, R^{1B} , R^{1C} und R² jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch 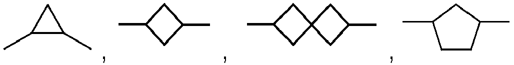 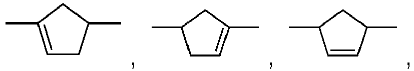 -C≡C-, -O-, -S-, -C≡C-, -CF₂O-, -OCF₂-, -OC-O- oder -O-CO- so ersetzt sein können, daß O-Atome nicht direkt miteinander verknüpft sind,
R¹ und R^{1'} jeweils unabhängig voneinander H oder Alkyl mit 1 bis 4 C-Atomen,
A² a) 1,4-Cyclohexylen oder 1,4-Cyclohexenylen, worin eine oder zwei nicht benachbarte CH₂ -Gruppendurch -O- oder -S- ersetzt sein können, b) 1,4-Phenylen, worin eine oder zwei CH-Gruppen durch N ersetzt sein können und worin eine oder mehrere H-Atome durch F oder Cl ersetzt sein können,
L¹ bis L¹² jeweils unabhängig voneinander F, CF₃, CHF₂ oder Cl,
Z¹, Z^{1'} und Z² jeweils unabhängig voneinander eine Einfachbindung, -CH₂CH₂-, -CH=CH-, -CF₂O-, -OCF₂-, -CH₂O-, -OCH₂-, -COO-, -OCO-, -C₂F₄-, -CF=CF-, -C≡C-,-CH=CHCH₂O-,
a 0 oder 1,
p 0, 1 oder 2,
q 0 oder 1,
v eine ganze Zahl von 1 bis 7,
t eine ganze Zahl von 1 bis 7, und
(O) eine Einfachbindung oder -O-,
bedeuten,
enthält,
wobei das Medium zusätzlich eine oder mehrere Verbindungen der Formel IV-1 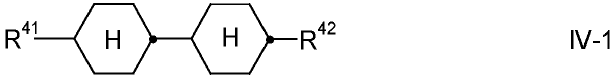 worin
R⁴¹ und R⁴² jeweils unabhängig voneinander geradkettiges Alkyl oder Alkenyl mit 1 bis 7 C-Atomen, alternativ R⁴² auch Alkoxy mit 1 bis 7 C-Atomen
bedeuten,
in einer Gesamtkonzentration von 5 % oder weniger und
eine oder mehrere Verbindungen der Formeln 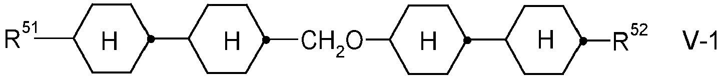 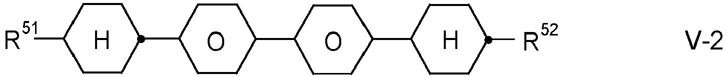 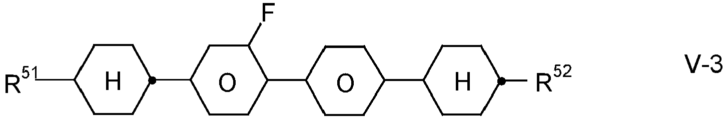 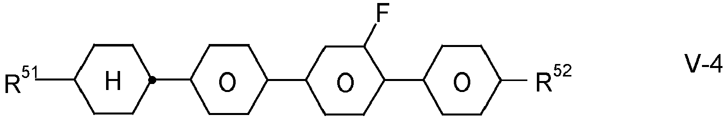 worin
R⁵¹ und R⁵² jeweils unabhängig voneinander geradkettiges Alkyl oder Alkenyl mit bis zu 7 C-Atomen, R⁵² alternativ Alkoxy mit 1 bis 7 C-Atomen,
bedeuten,
in einer Gesamtkonzentration im Bereich von 8 % bis 25 % enthält,
und ferner **dadurch gekennzeichnet, daß** der Klärpunkt des Mediums 120°C oder mehr beträgt.

2. Medium gemäß Anspruch 1, wobei das Medium eine oder mehrere Verbindungen ausgewählt aus der Gruppe der Verbindungen der Formeln 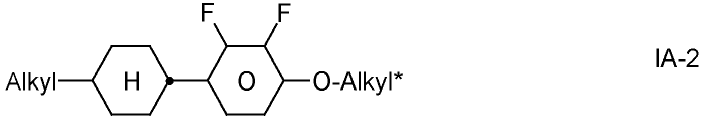 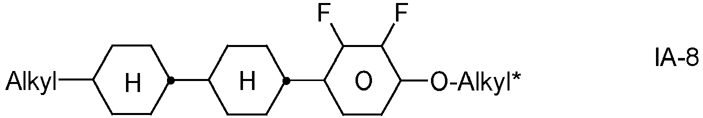 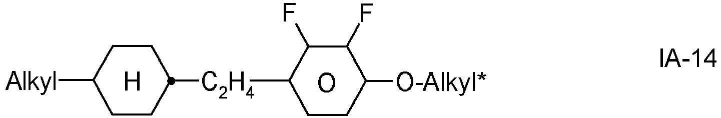 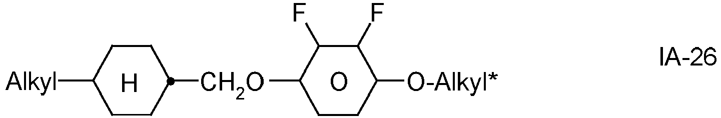 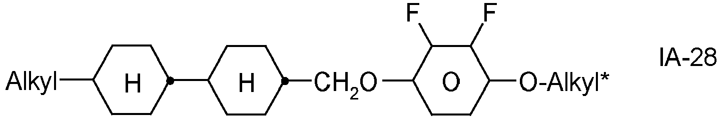 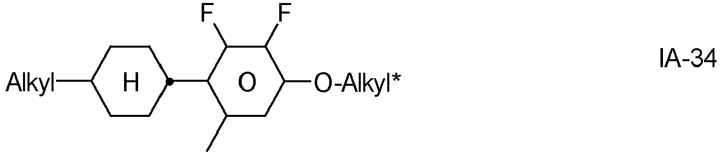 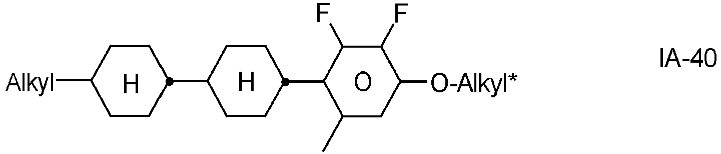 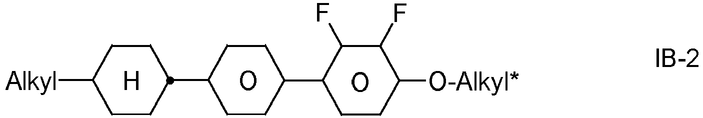 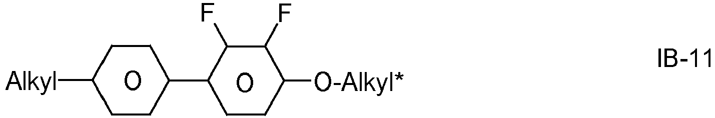 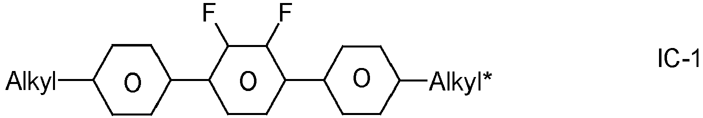 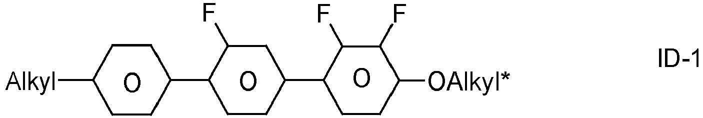 enthält
worin
Alkyl und Alkyl* jeweils unabhängig voneinander einen geradkettigen Alkylrest mit 1-7 C-Atomen bedeuten, in dem eine CH₂-Gruppe durch 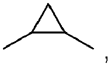 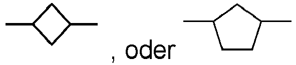 ersetzt sein kann, und
(O) für -O- oder eine Einfachbindung steht,
bedeuten.

3. Medium gemäß Anspruch 1 oder 2, wobei das Medium eine oder mehrere Verbindungen ausgewählt aus der Gruppe der Verbindungen der Formeln 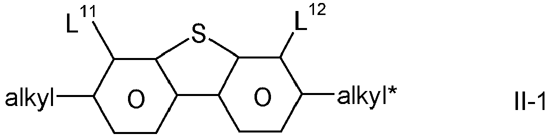 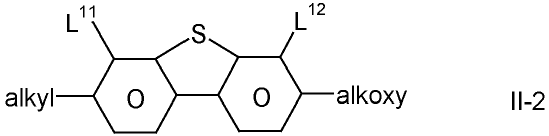 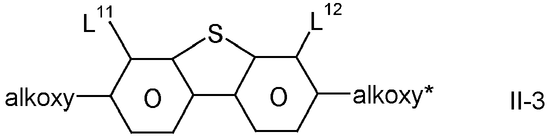 worin
L¹¹ und L¹² die in Anspruch 1 angegebene Bedeutung haben, und
alkyl und alkyl* jeweils unabhängig voneinander einen geradkettigen Alkylrest mit 1-7 C-Atomen, in dem eine CH₂-Gruppe durch 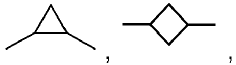 oder 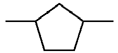 ersetzt sein kann, und
alkoxy und alkoxy* jeweils unabhängig voneinander einen geradkettigen Alkoxyrest mit 1-7 C-Atomen, in dem eine CH₂-Gruppe durch 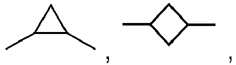 oder 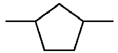 ersetzt sein kann,
bedeuten, enthält.

4. Verwendung des flüssigkristallinen Mediums nach einem oder mehreren der Ansprüche 1 bis 3 für elektrooptische Zwecke.

5. Verwendung nach Anspruch 4 in Flüssigkristallichtventilen für Beleuchtungseinrichtungen für Fahrzeuge oder in Flüssigkristallanzeigen.

6. Verfahren zur Herstellung eines Mediums nach einem oder mehreren der Ansprüche 1 bis 3, **dadurch gekennzeichnet, daß** eine oder mehrere Verbindungen ausgewählt aus der Gruppe der Verbindungen der Formeln IA, IB, IC, ID und II miteinander gemischt werden, wobei optional ein oder mehrere Additive hinzugefügt werden.

7. Elektrooptisches Bauelement enthaltend ein flüssigkristallines Medium nach einem oder mehreren der Ansprüche 1 bis 3.

8. Elektrooptisches Bauelement nach Anspruch 7, wobei das Bauelement ein Flüssigkristallichtventil ist, das transmissiv ausgebildet ist.

9. Elektrooptisches Bauelement nach Anspruch 7, wobei das Bauelement ein Flüssigkristallichtventil ist, das reflektiv ausgebildet ist.

10. Elektrooptisches Bauelement nach Anspruch 9 vom LCoS-Typ.

11. Beleuchtungseinrichtung für Fahrzeuge enthaltend ein elektrooptisches Bauelement nach einem oder mehreren der Ansprüche 8 bis 10.

## Claims

1. Liquid-crystalline medium, **characterised in that** it comprises one or more compounds, in a total concentration of 65% or more, selected from the group of the compounds of the formulae IA, IB, IC, ID and II 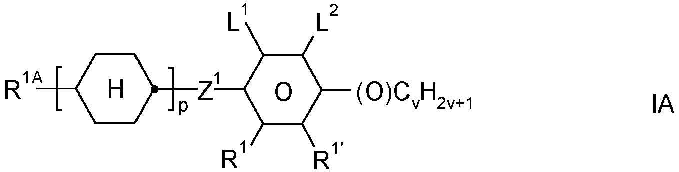 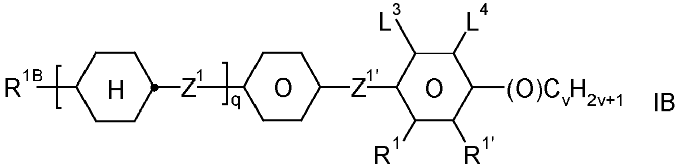 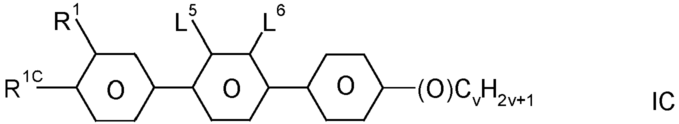 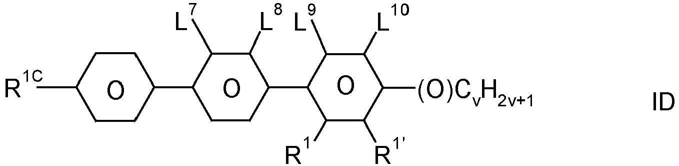 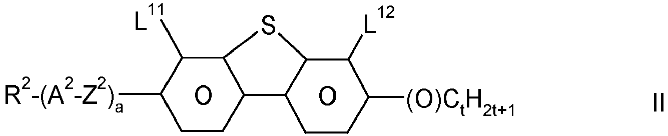 in which
R^{1A}, R^{1B}, R^{1C} and R² in each case, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by 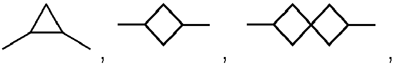 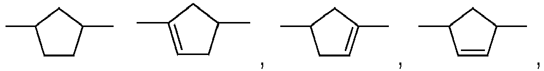 -C≡C-, -O-, -S-, -CF₂O-, -OCF₂-, -OC-O- or -O-CO- in such a way that O atoms are not linked directly to one another,
R¹ and R^{1'} in each case, independently of one another, denote H or alkyl having 1 to 4 C atoms,
A² denotes
a) 1,4-cyclohexylene or 1,4-cyclohexenylene, in which one or two non-adjacent CH₂ groups may be replaced by -O- or -S-,
b) 1,4-phenylene, in which one or two CH groups may be replaced by N and in which one or more H atoms may be replaced by F or Cl,
L¹ to L¹² in each case, independently of one another, denote F, CF₃, CHF₂ or Cl,
Z¹, Z^{1'} and Z² in each case, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -C≡C-, -CH=CHCH₂O-,
a denotes 0 or 1,
p denotes 0, 1 or 2,
q denotes 0 or 1,
v denotes an integer from 1 to 7,
t denotes an integer from 1 to 7, and
(O) denotes a single bond or -O-,
where the medium additionally comprises one or more compounds of the formula IV-1 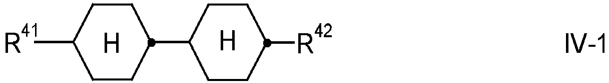 in which
R⁴¹ and R⁴² in each case, independently of one another, denote straight-chain alkyl or alkenyl having 1 to 7 C atoms, alternatively R⁴² also denotes alkoxy having 1 to 7 C atoms,
in a total concentration of 5% or less,
and
one or more compounds of the formulae 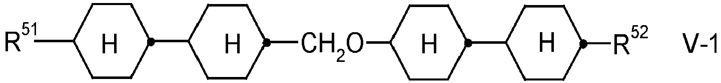 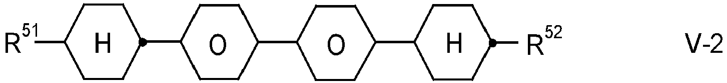 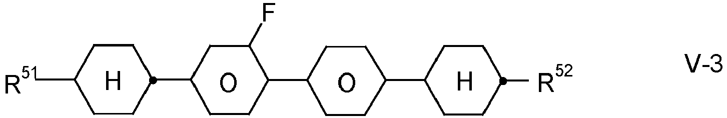 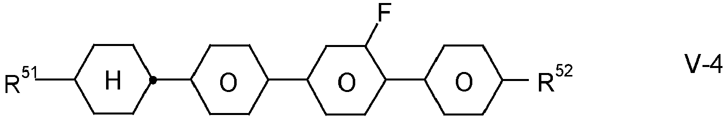 in which
R⁵¹ and R⁵² in each case, independently of one another, denote straight-chain alkyl or alkenyl having up to 7 C atoms, R⁵² alternatively denotes alkoxy having 1 to 7 C atoms,
in a total concentration in the range from 8% to 25%,
and furthermore **characterised in that** the clearing point of the medium is 120°C or more.

2. Medium according to Claim 1, where the medium comprises one or more compounds selected from the group of the compounds of the formulae 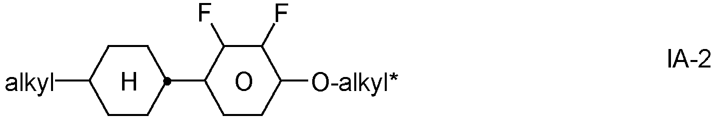 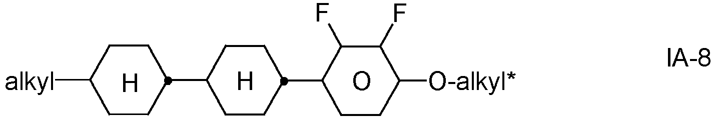 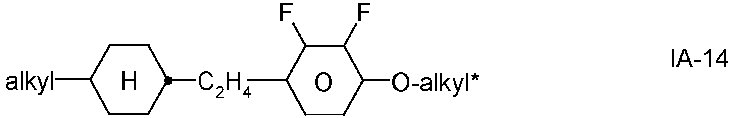 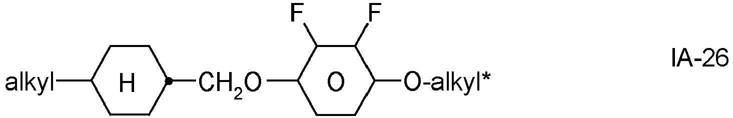 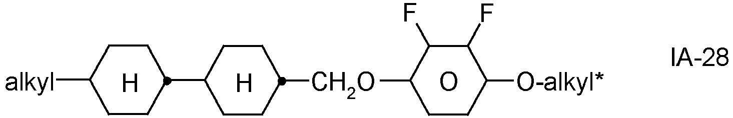 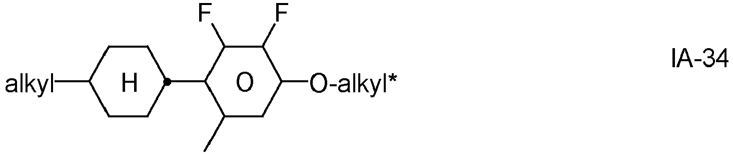 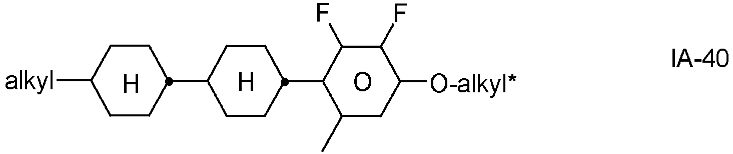 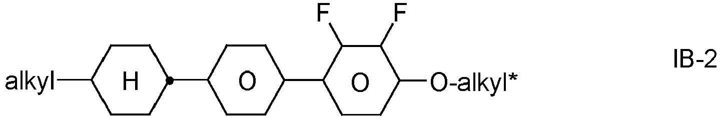 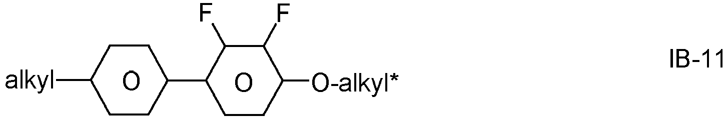 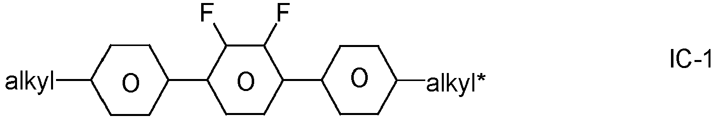 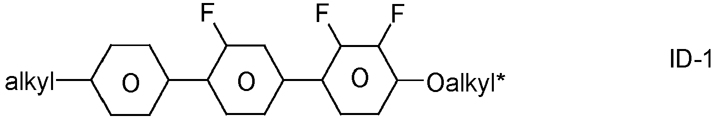 in which
alkyl and alkyl* in each case, independently of one another, denote a straight-chain alkyl radical having 1-7 C atoms, in which one CH₂ group may be replaced by 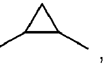 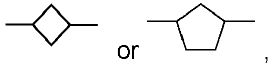 and
(O) stands for -O- or a single bond.

3. Medium according to Claim 1 or 2, where the medium comprises one or more compounds selected from the group of the compounds of the formulae 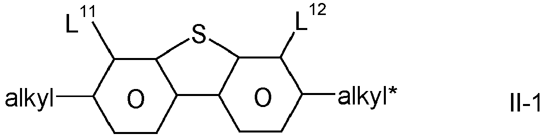 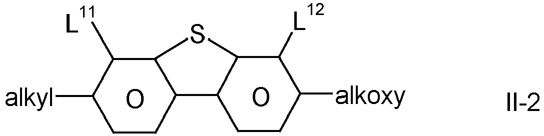 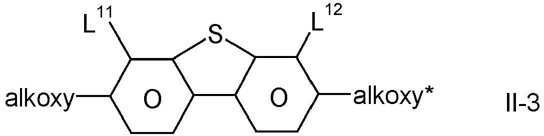 in which
L¹¹ and L¹² have the meanings indicated in Claim 1, and
alkyl and alkyl* in each case, independently of one another, denote a straight-chain alkyl radical having 1-7 C atoms, in which one CH₂ group may be replaced by 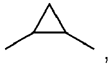 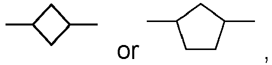 and
alkoxy and alkoxy* in each case, independently of one another, denote a straight-chain alkoxy radical having 1-7 C atoms, in which one CH₂ group may be replaced by

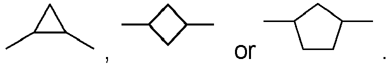

4. Use of the liquid-crystalline medium according to one or more of Claims 1 to 3 for electro-optical purposes.

5. Use according to Claim 4 in liquid-crystal light valves for lighting devices for vehicles or in liquid-crystal displays.

6. Process for the preparation of a medium according to one or more of Claims 1 to 3, **characterised in that** one or more compounds selected from the group of the compounds of the formulae IA, IB, IC, ID and II are mixed with one another, where one or more additives are optionally added.

7. Electro-optical component containing a liquid-crystalline medium according to one or more of Claims 1 to 3.

8. Electro-optical component according to Claim 7, where the component is a transmissive liquid-crystal light valve.

9. Electro-optical component according to Claim 7, where the component is a reflective liquid-crystal light valve.

10. Electro-optical component according to Claim 9 of the LCoS type.

11. Lighting device for vehicles comprising an electro-optical component according to one or more of Claims 8 to 10.

## Revendications

1. Milieu cristallin liquide, **caractérisé en ce qu'**il comprend un ou plusieurs composés, selon une concentration totale de 65% ou plus, choisis dans le groupe constitué par les composés de formules IA, IB, IC, ID et II 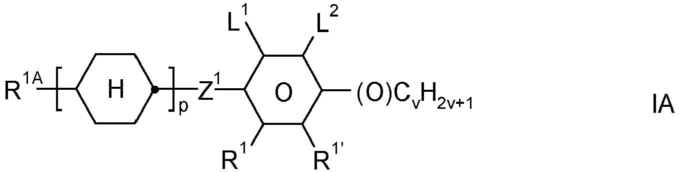 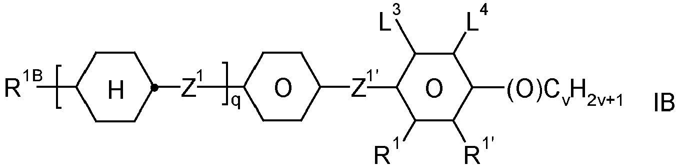 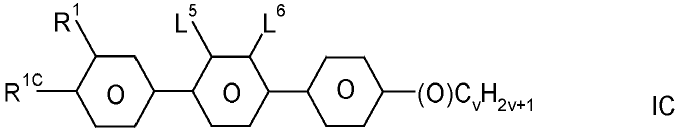 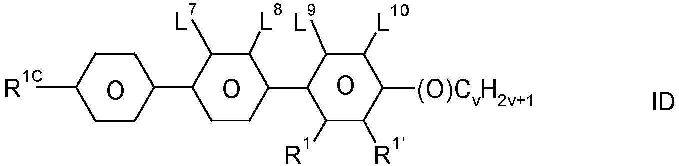 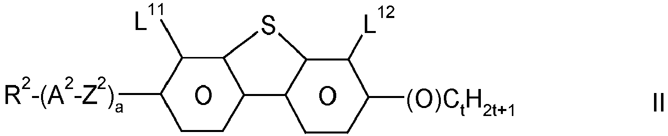 dans lesquelles
R^{1A}, R^{1B}, R^{1C} et R² dans chaque cas, indépendamment les uns des autres, désignent H, un radical alkyle ou alcényle ayant jusqu'à 15 atomes de C qui est non substitué, monosubstitué par CN ou CF₃ ou au moins monosubstitué par halogène, où, de plus, un ou plusieurs groupements CH₂ dans ces radicaux peuvent être remplacés par 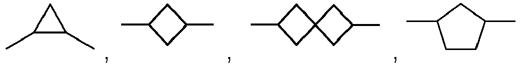 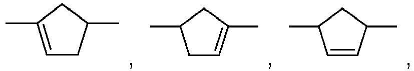 -C≡C-, -O-, -S-, -CF₂O-, -OCF₂-, -OC-O- ou -O-CO- de telle sorte que les atomes de O ne soient pas liés directement les uns aux autres,
R¹ et R^{1'} dans chaque cas, indépendamment l'un de l'autre, désignent H ou alkyle ayant de 1 à 4 atomes de C,
A² désigne
a) 1,4-cyclohexylène ou 1,4-cyclohexénylène, où un ou deux groupements CH₂ non adjacents peuvent être remplacés par -O- ou -S-,
b) 1,4-phénylène, où un ou deux groupements CH peuvent être remplacés par N et où un ou plusieurs atomes de H peuvent être remplacés par F ou Cl,
L¹ à L¹² dans chaque cas, indépendamment les uns des autres, désignent F, CF₃, CHF₂ ou Cl,
Z¹, Z^{1'} et Z² dans chaque cas, indépendamment les uns des autres, désignent une liaison simple, -CH₂CH₂-, -CH=CH-, -CF₂O-, -OCF₂-, -CH₂O-, -OCH₂-, -COO-, -OCO-, -C₂F₄-, -CF=CF-, -C≡C-, -CH=CHCH₂O-,
a désigne 0 ou 1,
p désigne 0, 1 ou 2,
q désigne 0 ou 1,
v désigne un nombre entier allant de 1 à 7,
t désigne un nombre entier allant de 1 à 7, et
(O) désigne une liaison simple ou -O-,
le milieu comprenant en outre un ou plusieurs composés de formule IV-1 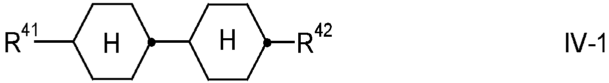 dans laquelle
R⁴¹ et R⁴² dans chaque cas, indépendamment l'un de l'autre, désignent alkyle ou alcényle à chaîne linéaire ayant de 1 à 7 atomes de C, de manière alternative R⁴² désigne également alcoxy ayant de 1 à 7 atomes de C,
selon une concentration totale de 5% ou moins,
et
un ou plusieurs composés de formules 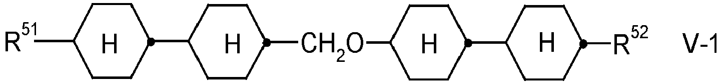 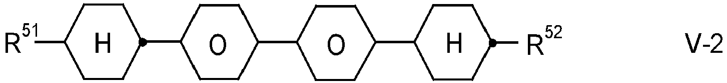 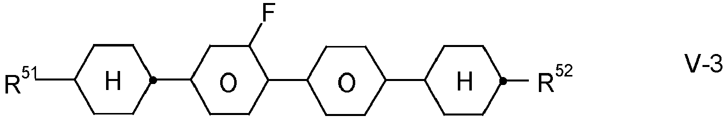 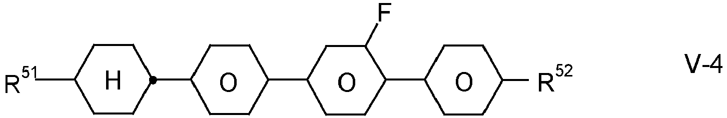 dans lesquelles
R⁵¹ et R⁵² dans chaque cas, indépendamment l'un de l'autre, désignent alkyle ou alcényle à chaîne linéaire ayant jusqu'à 7 atomes de C, R⁵² de manière alternative désigne alcoxy ayant de 1 à 7 atomes de C,
selon une concentration totale dans la plage allant de 8% à 25%,
et **caractérisé en outre en ce que** le point de clarification du milieu est de 120°C ou plus.

2. Milieu selon la revendication 1, le milieu comprenant un ou plusieurs composés choisis dans le groupe constitué par les composés de formules 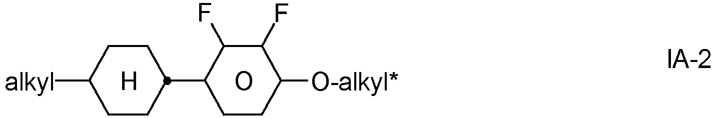 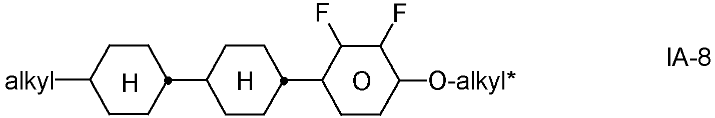 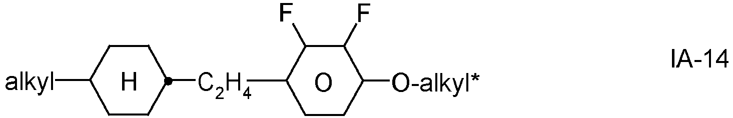 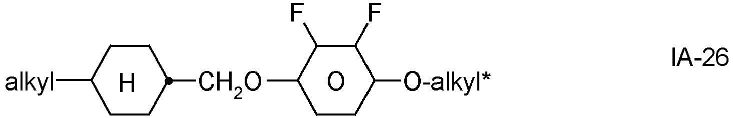 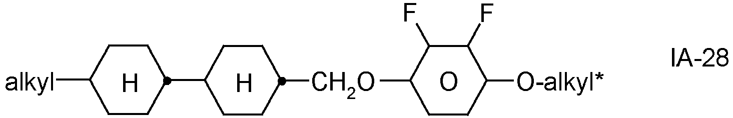 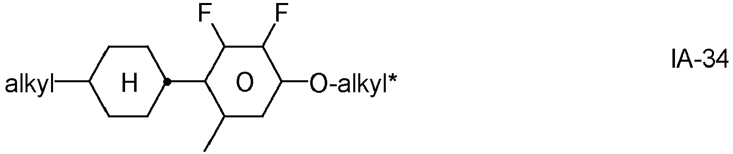 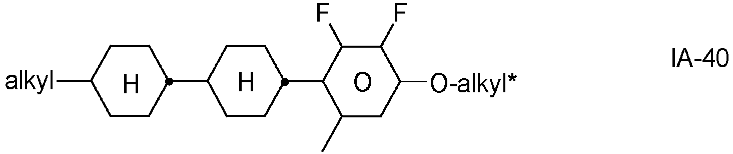 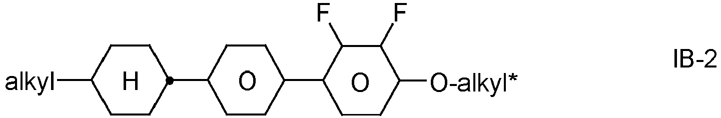 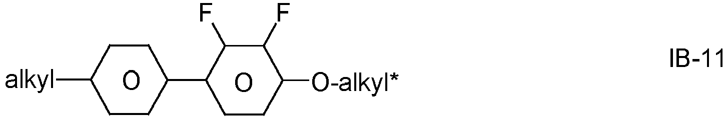 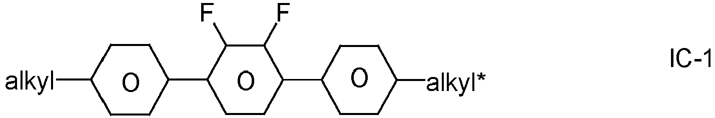 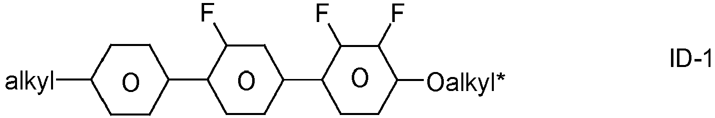 dans lesquelles
alkyl et alkyl* dans chaque cas, indépendamment l'un de l'autre, désignent un radical alkyle à chaîne linéaire ayant 1-7 atomes de C, où un groupement CH₂ peut être remplacé par 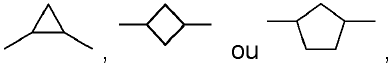 et
(O) représente -O- ou une liaison simple.

3. Milieu selon la revendication 1 ou 2, le milieu comprenant un ou plusieurs composés choisis dans le groupe constitué par les composés de formules 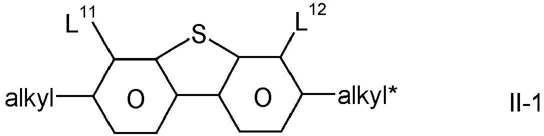 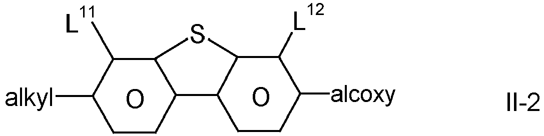 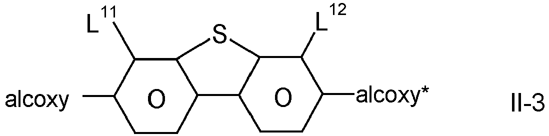 dans lesquelles
L¹¹ et L¹² revêtent les significations indiquées selon la revendication 1, et
alkyl et alkyl* dans chaque cas, indépendamment l'un de l'autre, désignent un radical alkyle à chaîne linéaire ayant 1-7 atomes de C, où un groupement CH₂ peut être remplacé par 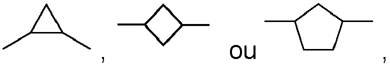 et
alcoxy et alcoxy* dans chaque cas, indépendamment l'un de l'autre, désignent un radical alcoxy à chaîne linéaire ayant 1-7 atomes de C, où un groupement CH₂ peut être remplacé par

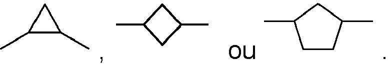

4. Utilisation du milieu cristallin liquide selon l'une ou plusieurs parmi les revendications 1 à 3 à des fins électro-optiques.

5. Utilisation selon la revendication 4, dans les valves lumineuses à cristaux liquides pour les dispositifs d'éclairage pour véhicules ou dans les affichages à cristaux liquides.

6. Procédé de préparation d'un milieu selon l'une ou plusieurs parmi les revendications 1 à 3, **caractérisé en ce qu'**un ou plusieurs composés choisis dans le groupe constitué par les composés de formules IA, IB, IC, ID et II sont mélangés les uns avec les autres, où un ou plusieurs additifs sont éventuellement ajoutés.

7. Composant électro-optique contenant un milieu cristallin liquide selon l'une ou plusieurs parmi les revendications 1 à 3.

8. Composant électro-optique selon la revendication 7, le composant étant une valve lumineuse à cristaux liquides de type transmission.

9. Composant électro-optique selon la revendication 7, le composant étant une valve lumineuse à cristaux liquides réfléchissante.

10. Composant électro-optique selon la revendication 9, de type LCoS.

11. Dispositif d'éclairage pour véhicules, comprenant un composant électro-optique selon l'une ou plusieurs parmi les revendications 8 à 10.
